(19) **Europäisches Patentamt / European Patent Office / Office européen des brevets**

(11) **EP 1 639 844 B1**

(12) **EUROPEAN PATENT SPECIFICATION**

(45) Date of publication and mention
of the grant of the patent:
**21.10.2015 Bulletin 2015/43**

(51) Int Cl.:
***H04W 48/18*** *(2009.01)*   *H04W 74/04* *(2009.01)*
***H04W 88/06*** *(2009.01)*

(21) Application number: **04776991.4**

(22) Date of filing: **23.06.2004**

(86) International application number:
**PCT/US2004/020165**

(87) International publication number:
**WO 2005/002257 (06.01.2005 Gazette 2005/01)**

(54) **Time interleaved multiple standard single radio system apparatus and method**

Zeitverschachtelte Mehrstandard-Einzelfunksystemvorrichtung und Verfahren

Système, appareil et procédé pour appareil radio unique à multiples normes à entrelacement temporel

(84) Designated Contracting States:
**AT BE BG CH CY CZ DE DK EE ES FI FR GB GR HU IE IT LI LU MC NL PL PT RO SE SI SK TR**

(30) Priority: **23.06.2003   US 480167 P**
**20.01.2004   US 537334 P**
**26.02.2004   US 547818 P**

(43) Date of publication of application:
**29.03.2006   Bulletin 2006/13**

(73) Proprietor: **Spreadtrum Communications Inc.**
**George Town, Grand Cayman (KY)**

(72) Inventors:
 • **MALONE, Lawrence, J.**
  **Carlsbad, CA 92008 (US)**
 • **LAMB, Aaron**
  **San Diego, CA 92122 (US)**

(74) Representative: **Bittner, Bernhard**
**Hannke Bittner & Partner**
**Patent- und Rechtsanwälte**
**Prüfeninger Strasse 1**
**93049 Regensburg (DE)**

(56) References cited:
**EP-A- 1 089 578     US-A- 5 943 333**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## EP 1 639 844 B1

**Description**

To facilitate the design and manufacture of wireless communication systems, a group of radio system experts codify the characteristics of a system into a standard. These characteristics typically include a specific operating radio frequencies, output power requirements, receiver sensitivity requirements, data rate requirements, communication protocols, security protocols, modulation types and spurious radio frequency emission requirements to name a few. Many standards exist for different wireless communication systems. These standards can be public domain or proprietary. Public standards include the well-known GSM, Bluetooth and IEEE 802.11 standards.

Conventional practice is to design a radio transceiver targeted to a particular standard. For example, a radio transceiver to be used in a device that operates using the Bluetooth™ communication protocol is typically sized and customized to the Bluetooth protocol. Generally the same can be said for radio transceivers designed for use in devices that operate using the IEEE 802.11 communication protocol.

However, there is a trend in many applications that a communication device operates multiple communication protocol technologies, or operates multiple instances of the same communication protocol technology. For example, a cellular telephone device may operate both IEEE 802.11 and Bluetooth functionality along with GSM.

The term WLAN typically refers to a class of wireless communication technology that operates at a distance up to 100 meters, and WPAN is commonly used to refer to a class of wireless communication technology that operates up to a distance of 10 meters. For simplicity, when used herein, the term WLAN is meant to encompass at least systems operating in accordance with standards such as IEEE 802.11/DS, 802.11a, 802.11b, and 802.11g. It should not be limited to these technologies as any other shorter-range wireless communication technology, particularly, but not limited to, those that do not require a license for operation by the Federal Communications Commission (FCC) in the United States (U.S.) and other similar unlicensed bands outside of the U.S.

Generally, the unlicensed bands are at 2.4 GHz and 5 GHz. The 5 GHz unlicensed band consists of band segments that are not contiguous, whereas the 2.4 GHz unlicensed band is typically single contiguous frequency band. As shown in the chart below, certain applications are served in particular unlicensed bands, depending on the application. Moreover, certain wireless communication technologies are used in the various bands.

| Wireless Technology | Frequency | Max bit Rate | Modulation | Distance |
|---|---|---|---|---|
| 802.11/DS | 2.4 GHz | 2 Mbps | DS/QPSK | 150m |
| 802.11/FH | 2.4 GHz | 2 Mbps | FH/FSK | 150m |
| 802.11b | 2.4 GHz | 11 Mbps | DS/CCK | 150m |
| 802.11a | 5.2 GHz | 54 Mbps | OFDM/QAM/PSK | 2m |
| 802.11g | 2.4 GHz | 54 Mbps | OFDM/QAM/PSK | 2m |
| Bluetooth | 2.4 GHz | 1 Mbps | GFSK | 30m |
| GSM450 | 450 MHz | 270.8 kbps | GMSK | 35km |
| GSM850 | 850 MHz | 270.8 kbps | GMSK | 35km |
| GSM900 | 900 MHz | 270.8 kbps | GMSK | 35km |
| DCS1800 | 1.8 GHz | 270.8 kbps | GMSK | 4km |
| PCS1900 | 1.9 GHz | 270.8 kbps | GMSK | 4km |

Methods and apparatus are disclosed for multiple wireless communication standards supported in a single radio apparatus by time interleaving communications with the multiple communication standards. A single radio can be controlled to time interleave communications standards to successively activate a single communication channel for each of the communication standards. The single radio device can be configured to order the supported communication standards in a hierarchy to provide priority to certain communications. Time interleaving wireless communications over standards that support burst communications, such as time multiplexed wireless communication systems or wireless packet data systems, allows a single radio to seamlessly support multiple standards with no loss of data.

One aspect of the invention is defined in claim 1.

In other embodiments, the method can include where the second communication system is asynchronous with the first communication system or configuring a wireless transceiver for a Time Domain Multiple Access (TDMA) communication system, and configuring the wireless transceiver for a first packet data communication system during at least one idle time slot of the TDMA communication system.

A time reference for the TDMA communication system includes a reference independent of a time reference for the packet data communication system. The method can also include determining a priority of each active communication link in the multiple communication systems based in part on a predetermined hierarchy, and configuring the wireless transceiver for the first packet data communication based in part on the priority.

The TDMA communication system can include a GSM wireless communication system and the first packet data communication system can include a Personal Area Network (PAN) or a Bluetooth communication system. The first packet data communication system can be a WLAN communication system.

Another aspect of the invention is defined in claim 13.

Configuring the wireless transceiver in the wireless device in the time multiplexed manner can include time multiplexing the wireless transceiver to support each of the active communication links using a round robin schedule, or time multiplexing the wireless transceiver to support each of the active communication links based on a predetermined hierarchy of communication systems. Real time data communication systems can be ranked higher in the hierarchy than non real time communication systems.

In still another aspect, the invention is defined in claim 17.

Configuring the wireless transceiver in the time multiplexed manner to support the first packet data communication system can include determining a duration of the GSM idle time, determining a packet length that can be transmitted during the GSM idle time, configuring the wireless transceiver to support the first packet data communication system after a beginning of the GSM idle time, and transmitting, with the wireless transceiver, a data frame having the packet length. Configuring the wireless transceiver in the time multiplexed manner to support the first packet data communication system can include determining a duration of the GSM idle time, configuring the wireless transceiver to support the first packet data communication system after a beginning of the GSM idle time, transmitting a retrieval command, and receiving a data frame in response to the retrieval command.

The features, objects, and advantages of embodiments of the disclosure will become more apparent from the detailed description set forth below when taken in conjunction with the drawings, in which like elements bear like reference numerals.

Figure 1 is a functional block diagram of an embodiment of a time interleaved multiple standard single radio device communicating with multiple communication systems.

Figures 2A-2D are functional block diagrams of embodiments of multiple standard devices.

Figures 3A-3E are functional timing diagrams of embodiments of a mobile station configured for multiple standard time interleaving.

Figures 4A-4D are functional timing diagrams of embodiments of a mobile station configured for multiple standard time interleaving.

Figures 5A-5C are functional timing diagram of embodiments of a mobile station configured for multiple standard time interleaving.

Figure 6 is functional timing diagram of an embodiment of a mobile station configured for multiple standard time interleaving.

Figure 7 is a functional timing diagram of an embodiment of a mobile station configured for multiple standard time interleaving of three communication standards.

Figure 8 is a functional block diagram of a prior art wireless audio distribution system.

Figure 9 is a functional block diagram of an embodiment of a multiple standard wireless audio distribution system.

A communication device having a single radio portion can be configured to concurrently interface with multiple communication systems, each of which operates under a different communication standard. The communication device can be configured to operate using any one of multiple communication protocols associated with communication systems. The communication device can also be configured to order the various communication protocols according to a hierarchy of communication systems. When concurrent communications are desired, the communication device can prioritize communications according to the hierarchy.

The communication device can be configured to time multiplex communications to each of the desired communication systems. The order and manner of time multiplexing is determined, based at least in part, on the hierarchy.

The hierarchy can be used to establish the timing required to time multiplex communications from the communication device to multiple communication systems. The communication system accorded the highest priority in the hierarchy can be used to determine the timing constraints on any additional communications between other communication systems.

The communication device communicates with the communication system having the next highest priority by time multiplexing the communications. The communications with the lower priority communication systems can be configured to occur during natural periods of inactivity for communications with the higher priority communication system. The process is continued for each of the lower priority communications until communications with all of the systems is allocated.

When the communication device is configured to operate concurrently over multiple time multiplexed or packet data systems, the communication device may be able to concurrently communicate over all of the systems without any loss of information. If one or more of the communication systems requires continuous access to a channel, there may be some degradation of the continuous channel link in order to time multiplex communications with other communication systems.

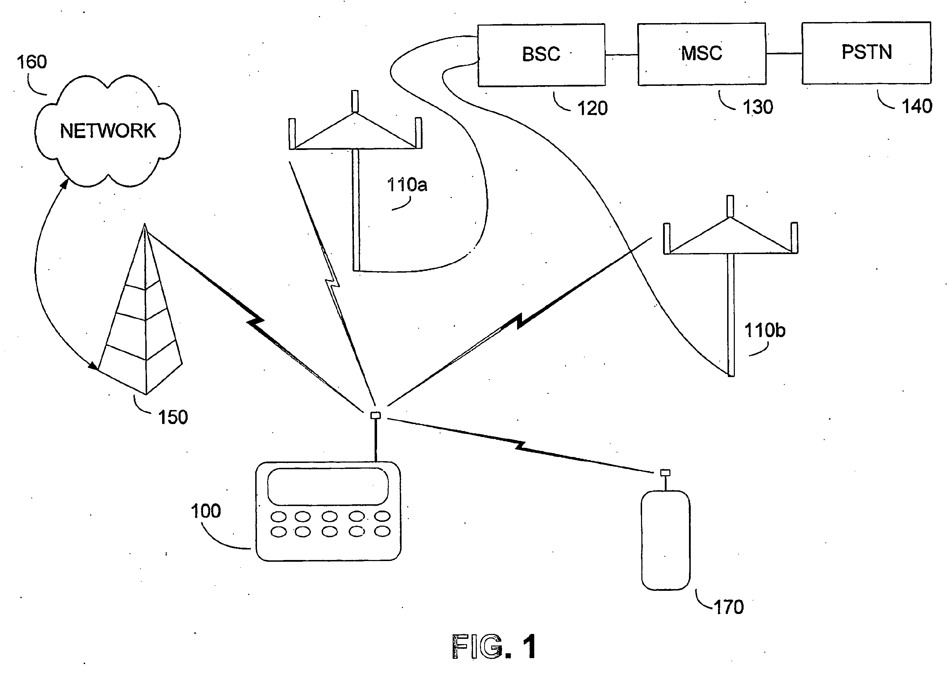

Figure 1 is a functional block diagram of an embodiment of a time interleaved multiple standard single radio device communicating with multiple communication systems. The multiple standard single radio device can be referred to alternatively as a user terminal, mobile terminal, user device, portable device, mobile station 100, or some other device. Additionally, the mobile station 100 need not be a portable device but may instead be a stationary device, despite the nomenclature.

In Figure 1, the mobile station 100 is shown as communicating with three distinct communication systems. However, the disclosure is not limited to concurrent communications with three communication systems, but is applicable to any number of communication systems having any number of different communication protocols.

In the embodiment of Figure 1, the mobile station 100 is configured to communicate with a first communication system, which may be a wireless telephone system such as a GSM telephone system, a second communication system, which may be a wireless local area network (WLAN) such as an IEEE 802.11 network, and a third communication system, which may be a Pico or Personal Area Network (PAN) such as a Bluetooth network. In the above example, each of the communication systems is a time multiplex or packet data communication system and the mobile station 100 can be configured to concurrently communicate with the communication systems by time multiplexing a single radio.

The mobile station 100 can be configured to communicate with a first communication system, which may be a GSM wireless telephone system. The mobile station 100 can communicate with one or more base stations 110a and 110b, which are coupled to one or more base station controllers 120. In the embodiment of Figure 1, two base stations 110a and 110b are shown coupled to the same base station controller 120, although such a configuration is not a requirement. The base station controller 120 can be coupled to a mobile station controller 130 which in turn can be coupled to a public switched telephone network (PSTN) 140. The first communication system is a two way communication system and the mobile station 100 can be configured to both transmit and receive information to and from the system.

The mobile station 100 can be configured to concurrently communicate with a second communication system, which can be a WLAN system. The WLAN system can include one or more access points 150 coupled to a network 160. The network 160 can be any type of communication network, such as a LAN or the Internet. The mobile station 100 can be configured to communicate with the WLAN using a second communication protocol that is distinct from a first communication protocol used to communicate with the first communication system. For example, the second communication system may be an IEEE 802.11 WLAN and the mobile station 100 can be configured to communicate with the system according to the IEEE 802.11 standard.

The mobile station 100 can also be configured to concurrently communicate with a third communication system, which may be a PAN such as a Bluetooth network. The mobile station 100 can be configured to communicate directly with a Bluetooth enabled device 170. for example, the mobile station 100 can be configured to receive communications from other like configured devices using the Bluetooth communication protocol. Other Bluetooth enabled devices can include kiosks, personal digital assistants, or wireless headsets.

In the embodiment shown in Figure 1, the mobile station 100 can be configured to prioritize the communications according to a predetermined hierarchy. In one embodiment, each of the possible communication protocols can be ordered in a hierarchy. For example, the mobile station 100 can be configured to prioritize GSM communications first, followed by Bluetooth communications, and then WLAN communications. Other embodiments may have additional or fewer communication protocols and may have different hierarchies. Additionally, the mobile station 100 can be configured to establish a communication hierarchy based on a factor such as time. For example, the mobile station 100 can prioritize the communication system that is the first to establish a link when the mobile station is idle. Other later arriving links can be prioritized according to the time the communication link is established. Still other embodiments can use other processes and factors when establishing a communication hierarchy.

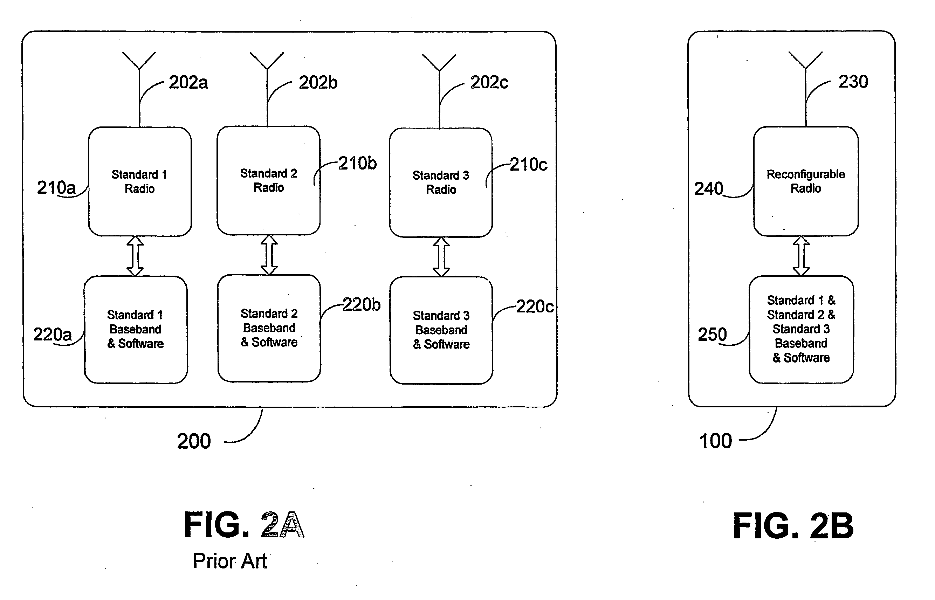

Figures 2A-2D are functional block diagrams of embodiments of devices configured to support multiple communication systems. Figure 2A is a functional block diagram of a prior art multimode device 200 having multiple radio-baseband processor pairs to accommodate the multiple communication protocols. The prior art multimode device 200 includes a first antenna 202a configured for the frequencies of a first communication system. The first antenna 202a is coupled to a first radio 210a configured to operate according to a first communication standard. The first radio 210a is coupled to a first baseband processor 220a configured to operate according to the first communication standard.

The multimode device 200 supports additional communication systems by adding additional radios and baseband processors. Therefore, the multimode device 200 can be configured to support a second communication standard using a second antenna 202b coupled to a second radio 210b. The second radio 210b is coupled to a second baseband processor 220b. The multimode device 200 can be configured to support a third communication standard using a third antenna 202c coupled to a third radio 210c. The prior art multimode device 200 essentially supports concurrent multiple communications through the use of multiple devices.

Figure 2B is a functional block diagram of an embodiment of a mobile station 100 configured to operate concurrently with multiple communication systems. The mobile station 100 can be, for example, the mobile station 100 shown in Figure 1. The mobile station includes an antenna 230 that can be configured to operate across the operating bands of the multiple communication systems. The antenna 230 is coupled to a reconfigurable radio 240 that can be configured to support multiple communication systems. For example, the reconfigurable radio 240 can be tuned for different frequencies in each of the operating bands and may include tunable filters that can be tuned across different frequency bands and that can be tuned to different passband responses depending on the active communication system. The reconfigurable radio can be, for example, a wireless transceiver that can be configured to support multiple communication systems.

The reconfigurable radio 240 can be coupled to a multiple standard baseband processor 250. The multiple standard baseband processor 250, as the name implies, can be configured to support multiple communication standards. In one embodiment, the multiple standard baseband processor 250 can be configured to receive a time multiplexed baseband signal and process the signals during each of the assigned times according to the corresponding communication standard. In another embodiment, the multiple standard baseband processor 250 can be configured to receive signals that are frequency multiplexed and can process the multiple standard signals according to the corresponding communication standard. In still another embodiment, the multiple standard baseband processor 250 can include one or more single mode baseband processors. For example, the multiple standard baseband processor can include a combination of a plurality of multiple mode baseband processors, a combination of a plurality of single mode baseband processors, or a combination of single mode baseband processors and multiple mode baseband processors. For example, the signals from a first communication system may be at baseband and the signals from other communication systems may be at various intermediate frequencies. In still other embodiments, some of the signals from the communication systems can be multiplexed at one frequency and other signals from other communication systems may be at one or more intermediate frequency bands.

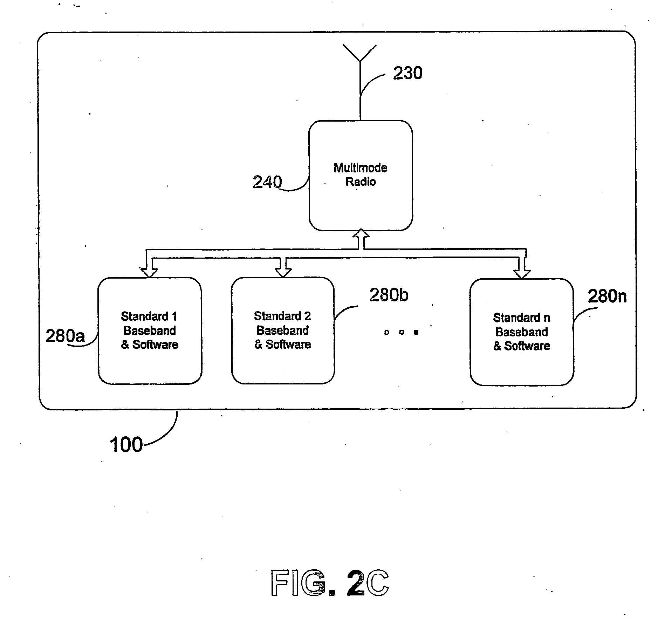

Figure 2C is a functional block diagram of another embodiment of a mobile station 100 configured to operate concurrently with multiple communication systems. In the embodiment of Figure 2C, the mobile station 100 includes an antenna 230 coupled to a reconfigurable radio 240. The antenna 230 and reconfigurable radio 240 can be, for example, as described for the embodiment shown in Figure 2B.

The reconfigurable radio 240 is coupled to multiple baseband processors 280a-280n. . Each of the baseband processors 280a-280n may be configured to process signals from one or more communication systems. For example, a first baseband processor 280a can be configured to process signals corresponding to a first communication system, a second baseband processor 280b can be configured to process signals corresponding to a second communication system. Similarly, an nth baseband processor 280n can be configured to process signals corresponding to an nth communication system. In other embodiments, some of the baseband processors 280a-280n may be configured to process signals corresponding to more than one communication system.

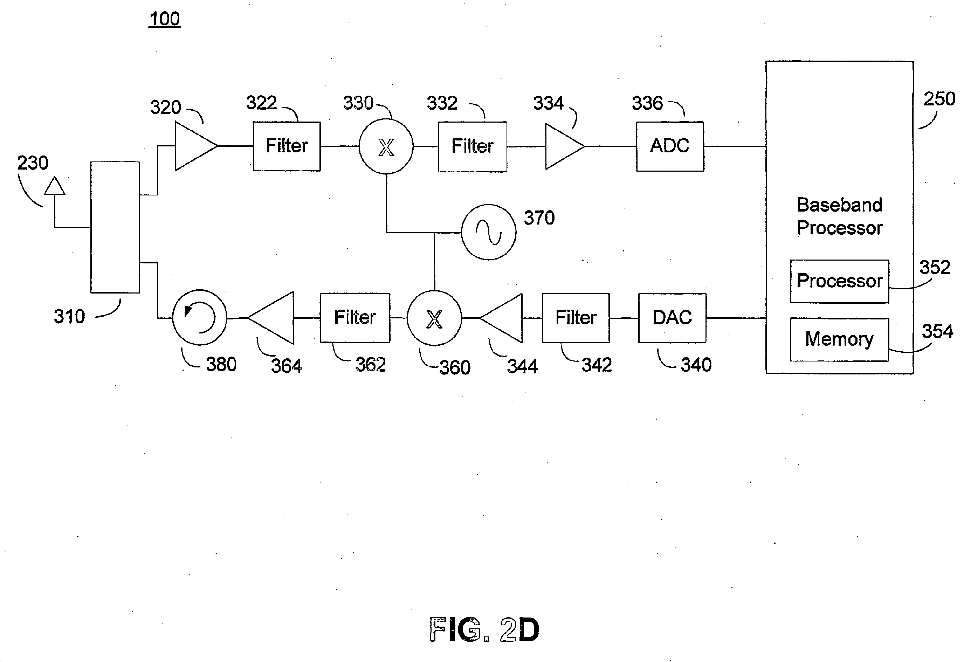

Figure 2D is a detailed functional block diagram of a mobile station 100. The mobile station 100 can be, for example, the mobile station 100 embodiment of Figure 2B. The mobile station 100 includes an antenna 230 that is configured to transmit and receive signals on each of the operating bands corresponding to the supported communication systems. The antenna 230 can be coupled to a duplexor 310 that can be configured to isolate the transmit path and transmitter power from the receive path.

The receive signal output of the duplexor 310 can be coupled to an RF amplifier 320 that is configured to amplify the received RF signals. The RF amplifier 320 can have sufficient bandwidth to operate over all supported operating bands. In another embodiment, the RF amplifier 320 may be an amplifier module having one or more amplifiers configured to provide gain over the supported operating bands. The RF amplifier 320 may be, for example, a low noise amplifier.

The output of the RF amplifier 320 can be coupled to an RF filter 322 that is configured to attenuate out of band signals. The RF filter 322 can be, for example, a tunable filter that can be configured for multiple frequencies and multiple passband responses. The output of the RF filter 322 can be coupled to a mixer 330 that is configured to downconvert the received RF signal to a baseband signal. Other mobile station 100 embodiments may use more than one frequency conversion stage. The Local Oscillator (LO) port of the mixer 330 can be driven with the output of a tunable LO 370.

The frequency of the LO 370 may be tuned during receive periods to downconvert the received RF signal to a baseband signal. in other embodiments, the LO 370 may be configured to downconvert the received signal to an intermediate frequency.

The output of the mixer 330 can be coupled to a baseband filter 332 configured to reject unwanted mixer products and other out of band signals. The bandwidth of the baseband filter 332 maybe tunable to allow the bandwidth to be tailored to the particular active communication system.

The output of the baseband filter 332 can be coupled to a baseband amplifier 334. The output of the baseband amplifier 334 can be coupled to an Analog to Digital Converter (ADC) 336 that converts the signal to a digital representation. The output of the ADC 336 can be coupled to an input of a multiple standard baseband processor 250 that may be configured to support multiple communication standards.

The multiple standard baseband processor 250 can include a processor 352 and memory 354. The memory 354 can store processor readable instructions in the form of software that, when executed by the processor 352, configures the multiple standard baseband processor 250 to tune the various tunable filters and amplifiers in order to support a communication system. The multiple standard baseband processor 250 can also be configured to demodulate and recover received signals. For the transmit path, the multiple standard baseband processor 250 can also be configured to receive baseband signals, such as voice or data, and process them for transmission to a particular wireless communication system.

The multiple standard baseband processor 250 typically outputs the processed transmit signals as baseband signals, although in some embodiments the multiple standard baseband processor 250 may output intermediate frequency signals. The transmit signal output from the multiple standard baseband processor 250 can be coupled to a Digital to Analog Converter (DAC) 340 configured to convert a digital signal to an analog representation.

The output of the DAC 340 can be coupled to a baseband filter 342 configured to attenuate out of band products. The baseband filter 342 may have a tunable bandwidth which may be optimized based on the communication system being supported. The output of the baseband filter 342 can be coupled to a baseband amplifier 344 configured to amplify the transmit signal and drive a port of a mixer 360.

The mixer 360 can be configured to upconvert the baseband signal to a desired transmit RF frequency. The LO 370 can be coupled to the LO port of the mixer 360 and can be tuned to the desired frequency to upconvert the baseband signal. In other embodiments, multiple LOs can be used and the transmit path may have one or more LOs that are distinct from the receive LOs.

The output of the mixer 360 can be coupled to an RF filter 362 configured to reject undesired mixer products as well as other out of band signals. The RF filter 362 may be tunable and may be tuned to a particular RF band and bandwidth desired to support a communication system.

The output of the RF filter 362 can be coupled to an RF amplifier 364 that may have an operating band of sufficient bandwidth to support all of the desired communication systems. The output of the RF amplifier 364 can be coupled to a circulator 380 or isolator. The output of the circulator 380 can be coupled to the transmit input of the duplexor 310 and from the duplexor 310 to the antenna 230.

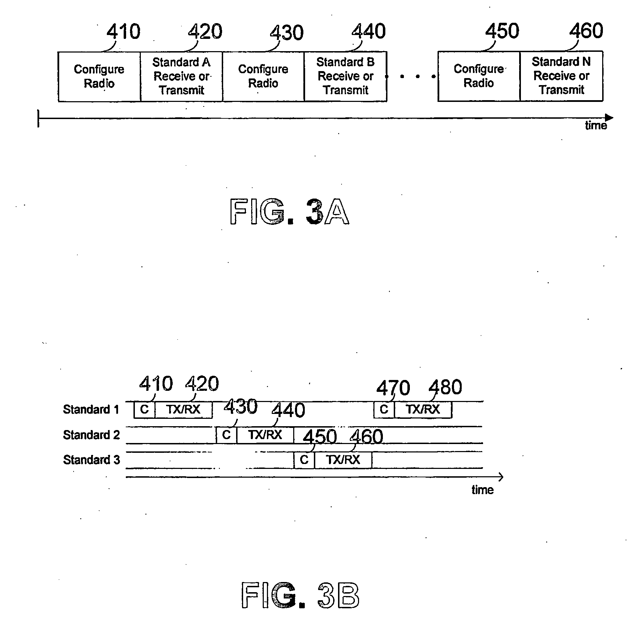

Figure 3A is a functional timing diagram of an embodiments of multiple standard time interleaving. In the embodiment shown in Figure 3A, N-different communication standards are time interleaved, with each communication standard supported once before support for another communication system is repeated. The mobile station can successively enable communications with each of the communication systems based on a hierarchy of systems. As will be seen in other embodiments, access to each of the supported communication systems need not be equal and some communication systems may be supported to the temporary exclusion of others.

The timing diagram of Figure 3A begins with the mobile station configured for a communication system other than the first communication system. The mobile station may be, for example, configured for another supported communication system or may be in an idle mode after a power on initialization routine. The mobile station initially configured itself to support the first communication system. For example, the mobile station may configure the radio 410 or analog portion to receive or transmit signals in the first communication system. For example, the mobile station may tune an LO frequency, tune a filter center frequency, and tune a filter bandwidth. During the period in which the mobile station configured the radio 410, the mobile station may also configure the baseband processor for the corresponding communication system. Typically, the amount of time required for an LO to tune and settle to a desired frequency is much greater than the time to configure any of the other elements of the mobile station. Additionally, in some embodiments one or more baseband processors may be configured to simultaneously and independently support multiple communication systems. Thus, the time to tune the radio may be the constraining factor in determining how quickly the mobile station can configure itself for different communication systems.

After configuring the radio for the first communication system, the mobile station is prepared to interface with the system. The mobile station then can communicate in a transmit or receive period 420 in the first communication system in accordance with the standard associated with the first communication system. The time in which the mobile station is configured to communicate in a transmit or receive period 420 in the first communication system can be defined by the standard, can be determined by the mobile station, or determined by a remote device. For example, the mobile station configured to transmit data packets may determine a size of the data packets that fits in a predetermined time period.

At the end of the transmit or receive period 420 in the first communication system, the mobile station can configure itself to support a second communication system. The mobile station may configure the radio 430 for the second communication system. After configuring the radio 430 for the second communication system the mobile station is configured to communicate in a transmit or receive period 440 in the second communication system.

The mobile station can continue to successively configure and communicate with communication systems for which the mobile station is engaged in active communications through to the final active communication system in the hierarchy. As with the previous communications, the mobile station can configure itself for the Nth communication system by configuring the radio 450. Once the radio is configured, the mobile station is configured to communicate in a transmit or receive period 460 with the Nth communication system.

Figure 3B is a timing diagram of a mobile station configured to time multiplex three different communication systems for which a communication channel is active. The three different communication systems may operate with three different communication standards. The mobile station may organize the communication systems in a hierarchy that prioritizes the communication systems in the order of the first communication system, the second communication system, and the third communication system.

The mobile station begins by configuring its radio 410 for the first communication system and the first communication standard. The mobile station then can communicate in a transmit or receive period 420 in the first communication system. The mobile station can then configure the radio 430 for the second communication system and the second communication standard. The mobile station then can communicate in a transmit or receive period 440 with the second communication system for a period of time.

The mobile station repeats the process for the third communication system. The mobile station configures the radio 450 for the third communication system and the third communication standard. The mobile station then can communicate over a transmit or receive period 460 with the third communication system for a period of time.

Because the number, N, of communication systems equals three in this example, the mobile station has enabled access to all active communication systems after communicating with the third communication system. The mobile station can then return to the active communication system having the highest priority in the hierarchy and repeat the entire process. Therefore, the mobile station can configure the radio 470 for the first communication system and the first communication standard. The mobile station then can communicate in a transmit or receive period 480 in the first communication system for a period of time.

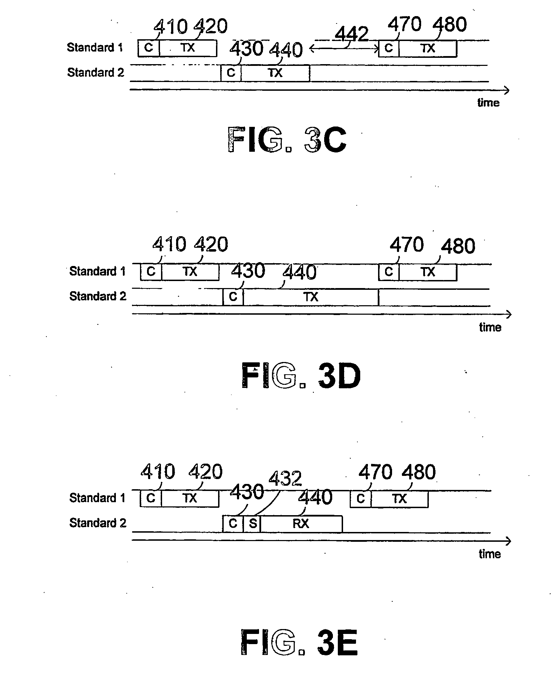

Figure 3C is a timing diagram of a mobile station to time multiplex two different active communication systems. The mobile station may support more than two communication systems. However, the timing diagram of Figure 3C shows a time period in which two communication systems are active. For example, the first communication system may be a GSM telephone system and the second communication system may be a PAN or WLAN.

As shown in the timing diagram, the mobile station begins by configuring its radio 410 for the first communication system and the first communication standard. The mobile station then can transmit in the first communication system during a transmit or receive period 420 of time. The mobile station can then configure the radio 430 for the second communication system and the second communication standard. The mobile station then can communicate in a transmit or receive period 440 with the second communication system for a period of time.

The mobile station then returns to support the first communication system. The mobile station configures the radio 470 for the first communication system and the first communication standard. The mobile station then can communicate in a transmit or receive period 480 with the first communication system for a period of time.

The time period between successive transmissions in the first communication system may be a defined period of time, such as in a time multiplexing system like a GSM telephone system. Thus the mobile station supporting a GSM system as the first communication system has a fixed, predictable time between the first transmit or receive period 420 and the second transmit or receive period 480. Additionally, the time needed to configure the radio may be known.

As shown in Figure 3C, during the time that the mobile station is not supporting the first communication standard, either by configuring the radio or transmitting, the mobile station can transmit some information. If the mobile station or a baseband processor within the mobile station does not know how long it has to access the radio, the mobile station cannot optimize the length of the transmission. Thus, there may be an idle period of time 442 after the mobile station completes a transmission or receive period, but before it configures the radio for another system the radio is unused or idle. This is not an optimum use of resources if the mobile station has additional data that could have been sent during the transmit or receive period 440 for the second communication system. Likewise, if the mobile station is configured to receive data, the receive period may not be optimized if the mobile station experiences an idle radio time.

Figure 3D shows a timing diagram for a mobile station embodiment that is optimized to use a maximum available time period for each communication. For example, the mobile station, or particularly the baseband processors within the mobile station, know the timing associated with the other active communication systems.

If the baseband processor or portion of a baseband processor supporting a second communication system is aware of the timing associated with supporting the first communication system, the mobile station can increase the radio utilization by increasing the length of its transmit or receive period 440 to the full-extent of the unused or idle radio duration. Thus, the mobile station can increase the throughput for the second communication system. For example, the mobile station or the appropriate baseband processor store the timing values associated with the first communication standard, such as that the start times of the transmission, the duration to configure the radio 410,470, and the duration of the transmit or receive periods 420 and 480.

The mobile station can determine the amount of time between the end of the transmit or receive period 420 for the first communication system and the beginning of the period to configure the radio 470 for the next transmission or communication. The mobile station can subtract from the available time the duration of the radio configuration period 430 for the second communication system. The mobile station can thus determine the available duration for communicating with the second communication system.

If the mobile station is configured to transmit during the available time period, the mobile station can determine the size of a data packet that can fit into the time period. For example, the mobile station may be able to determine the number of bits or symbols that can fit into the available time period and allocate that number of bits or symbols to the transmit or receive period 440. Alternatively, the mobile station may be constrained to defined packet sizes and may determine the optimal number and size of the packets that can fit into the available time period.

Communications devices expend energy when they are transmitting or receiving. In the case of transmitting, a mobile station uses power to run its internal analog and digital circuits, to code and modulate the signal, and to radiate or otherwise transmit a signal. When a mobile station is receiving, it uses power to demodulate and decode the signal. Also, a mobile station uses power in receive mode to listen to the channel even if a signal is not being transmitted to it. Typically, a significant portion of a power is used for this active listening purpose.

To increase the efficiency of the system, some wireless systems have polling mechanisms where a mobile station can request data from another node. If the node has data queued for the mobile station, the node can respond to a request by sending data to the mobile station.

Figure 3E is a timing diagram of an embodiment of a mobile station configured to use the polling mechanism. As discussed above, a mobile station supporting a first communication standard needs time to configure the radio 410 and 470 and time for the transmit or receive period 420 and 480. During the time the mobile station is not using the radio to support the first communication system, the mobile station can configure the radio to receive information from a second communication system. If a remote station, such as a WLAN access point or a Bluetooth device, attempts to transmit a message to the mobile station while the radio is configured to support some other communication system, the message will not be received.

To avoid losing messages in systems which support information retrieval, the mobile station can configure the radio 430 for a second communication system, send a retrieval command 432 to the remote station and receive the information in a transmit or receive period 440. Through this technique the mobile station can synchronize the reception of data to the radio configuration. If the communication system supports adjustable size information packets, a further embodiment of this entails sending the duration available for reception to the remote wireless communication device in the retrieval command 432, and thus maximizing the downlink throughput of the system.

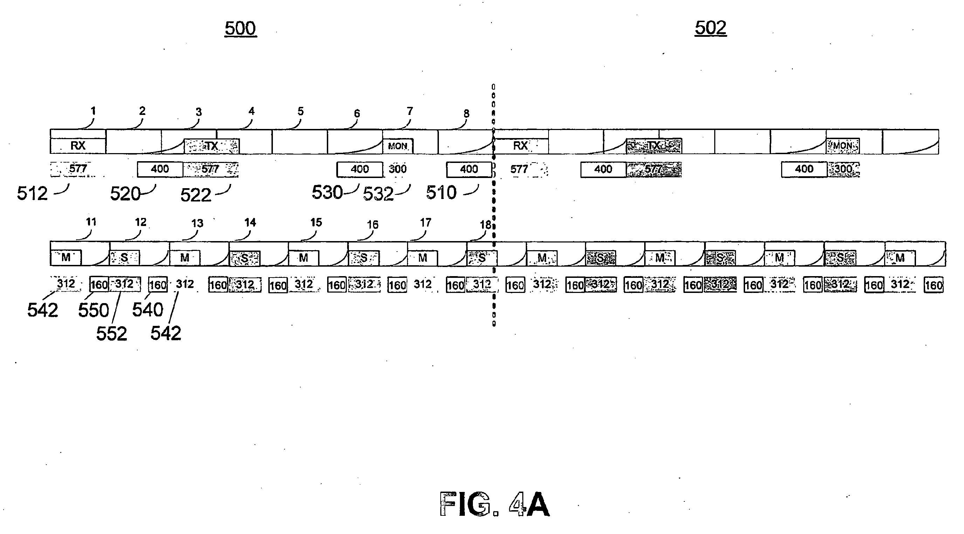

Figures 4A-4C are timing diagrams for the embodiment in which the first communication system is a GSM wireless telephone system and the second communication system is a PAN, such as a Bluetooth communication system. A single device concurrently supporting both systems can be typical, for example, in a GSM wireless phone having a Bluetooth wireless headset.

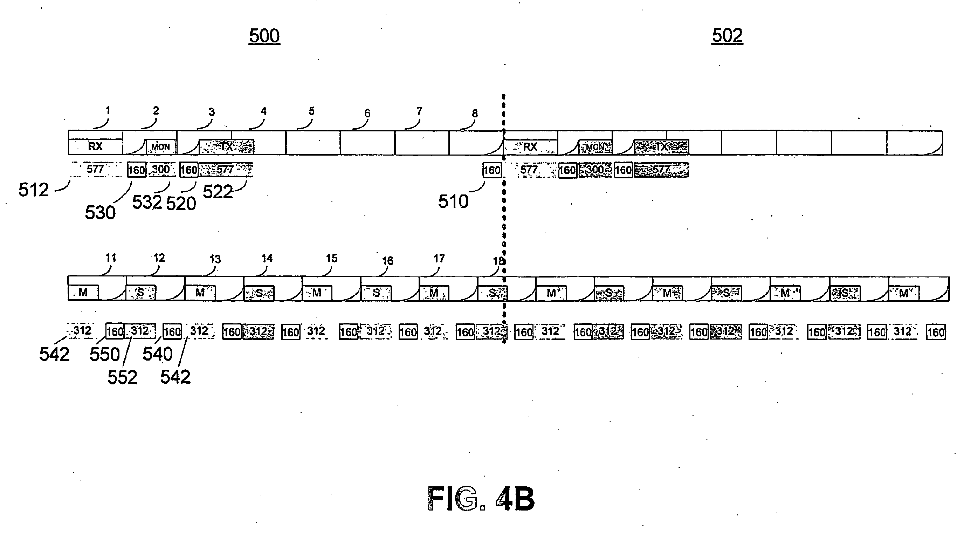

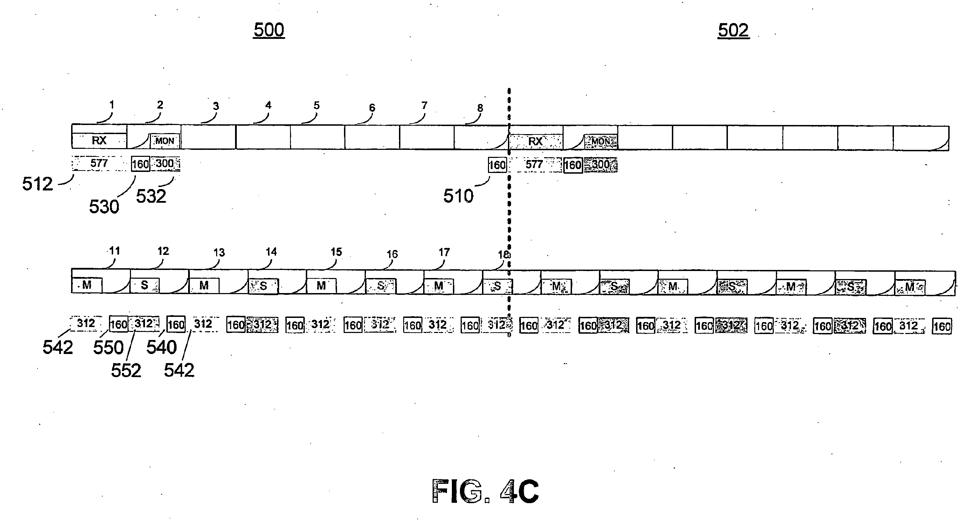

Figure 4A are timing diagrams of prior art GSM and Bluetooth device embodiments. Figures 4B and 4C are timing diagrams of a mobile station configured to time interleave the two communication systems with the GSM communication system having higher priority over the Bluetooth communication system.

In a mobile telephone system like the GSM network a telephone call is usually transmitted to a mobile station via a PSTN, a mobile switching center, one of a plurality of radio network controllers (RNC) alternatively referred to as BSC, and one of a plurality of base stations (BS). Each individual base station serves a predetermined cell area.

The GSM communication system uses a combination of Time and Frequency-Division Multiple Access (TDMA/FDMA). The FDMA part involves the division by frequency of the bandwidth into carrier frequencies spaced 200 kHz apart. One or more carrier frequencies are assigned to each base station. Each of these carrier frequencies is then divided in time, using a TDMA scheme. The fundamental unit of time in this TDMA scheme is called a burst period and it lasts 15/26 ms, or approx. 0.577 ms. Eight burst periods are grouped into a TDMA frame of 120/26 ms, or approx. 4.615 ms, which forms the basic unit for the definition of logical channels. One physical channel is one burst period per TDMA frame.

Channels are defined by the number and position of their corresponding burst periods. All these definitions are cyclic, and the entire pattern repeats approximately every 3 hours. Channels can be divided into dedicated channels, which are allocated to a mobile station, and common channels, which are used by mobile stations in idle mode.

The system defines traffic channels (TCH) to carry speech and data traffic. Traffic channels are defined using a 26-frame multiframe, or a group of 26 TDMA frames. The length of a 26-frame multiframe is 120 ms, which defines the length of a burst period. The burst period is thus 120 ms divided by 26 frames divided by 8 burst periods per frame. Out of the 26 frames, 24 are used for traffic, 1 is used for the Slow Associated Control Channel (SACCH) and 1 is currently unused. TCHs for the uplink and downlink are separated in time by three burst periods, so that the mobile station does not have to transmit and receive simultaneously, thus simplifying the electronics, specifically increasing the time allowed for changing frequencies allowing slower settling Phase Lock Loops (PLLs). As the propagation delay between the BTS and MS increases, the BTS instructs the MS to transmit earlier so that it is synchronized to other transmitting units. Thus, the three burst period between uplink and downlink is shortened by the timing advance interval.

In addition to these full-rate TCHs, there are also half-rate TCHs defined, although they are not yet fully implemented. Half-rate TCHs can effectively double the capacity of a system once half-rate speech coders are specified (for example, speech coding at around 7 kbps, instead of 13 kbps). Eighth-rate TCHs are also specified and are used for signaling. In the recommendations, they are referred to as Stand-alone Dedicated Control Channels (SDCCH).

Common channels can be accessed both by idle mode and dedicated mode mobile stations. The common channels are used by idle mode mobile stations to exchange the signaling information required to change to dedicated mode. Mobile stations already in dedicated mode monitor the surrounding base stations for handover and other information. The common channels are defined within a 51-frame multiframe so that dedicated mobiles using the 26-frame multiframe TCH structure can still monitor control channels. The common channels include a Broadcast Control Channel (BCCH) that continually broadcasts, on the downlink, information including base station identity, frequency allocations, and frequency-hopping sequences. Also included are a Frequency Correction Channel (FCCH) and Synchronization Channel (SCH) that is used to synchronize the mobile station to the time slot structure of a cell by defining the boundaries of burst periods and the time slot numbering. Every cell in a GSM network broadcasts exactly one FCCH and one SCH, which are by definition on time slot number 0 within a TDMA frame. Other channels include the Random Access Channel (RACH) that is a slotted Aloha channel used by the mobile to request access to the network, the Paging Channel (PCH) that is used to alert the mobile station of an incoming call, an Access Grant Channel (AGCH) that is used to allocate an SDCCH to a mobile station for signaling in order to obtain a dedicated channel, following a request on the RACH.

In a cellular network, the radio and fixed links required are not permanently allocated for the duration of a call. Handover, or handoff as it is called in North America, is the switching of an on-going call to a different channel or cell. The execution and measurements required for handover form one of the basic functions. There are four different types of handover in the GSM system, which involve transferring a call between: Channels (time slots) in the same cell; Cells (Base Transceiver Stations) under the control of the same BSC; Cells under the control of different BSCs, but belonging to the same MSC; and Cells under the control of different MSCs.

The first two types of handover, called internal handovers, involve only one BSC. To save signaling bandwidth, they are managed by the BSC without involving the MSC, except to notify it at the completion of the handover. The last two types of handover, called external handovers, are handled by the MSCs involved. An important aspect of GSM is that the original MSC, the anchor MSC, remains responsible for most call-related functions, with the exception of subsequent inter-BSC handovers under the control of the new MSC, called the relay MSC.

Handovers can be initiated by either the mobile station or the MSC as a means of traffic load balancing. During its idle time slots, the mobile station scans the Broadcast Control Channel of up to 16 neighboring cells. During each TDMA frame, a GSM mobile station can measure power levels in adjacent cells for 300 us. Using this information it forms a list of the six best candidates for possible handover, based on the received signal strength. This information is passed to the BSC and MSC, at least once per second, and is used by the handover algorithm.

The algorithm for making a handover decision is not specified in the GSM recommendations. However, two basic algorithms are used, both closely tied in with power control. This is because the BSC usually does not know whether the poor signal quality is due to multipath fading or to the mobile station having moved to another cell. This is especially true in small urban cells.

There are four different types of bursts used for transmission in GSM. The normal burst is used to carry data and most signaling. It has a total length of 156.25 bits, made up of two 57 bit information payloads, a 26 bit training sequence used for equalization, 1 stealing bit for each information block used for FACCH, 3 tail bits at each end, and an 8.25 bit guard sequence. The 156.25 bits are transmitted in 0.577 ms, giving a gross bit rate of 270.833 kbps.

The F burst, used on the FCCH, and the S burst, used on the SCH, have the same length as a normal burst, but a different internal structure, which differentiates them from normal bursts thus allowing synchronization. The access burst is shorter than the normal burst, and is used only on the RACH.

GSM is a digital system, so speech which is inherently analog has to be digitized. The method employed by Integrated Services Digital Network (ISDN) and by current telephone systems for multiplexing voice lines over high speed trunks and optical fiber lines is Pulse Coded Modulation (PCM). The output stream from PCM is 64 kbps, too high a rate to be feasible over a radio link. The 64 kbps signal, although simple to implement, contains much redundancy. The GSM group studied several speech coding algorithms on the basis of subjective speech quality and complexity, which is related to cost, processing delay, and power consumption once implemented, before arriving at the choice of a Regular Pulse Excited -- Linear Predictive Coder (RPE--LPC) with a Long Term Predictor loop. Basically, information from previous samples, which does not change very quickly, is used to predict the current sample. The coefficients of the linear combination of the previous samples, plus an encoded form of the residual, the difference between the predicted and actual sample, represent the signal. Speech is divided into 20 millisecond samples, each of which is encoded as 260 bits, giving a total bit rate of 13 kbps. This is the so-called Full-Rate speech coding. Recently, an Enhanced Full-Rate (EFR) speech coding algorithm has been implemented by some North American GSM1900 operators. This is said to provide improved speech quality using the existing 13 kbps bit rate.

Discontinuous transmission (DTX) is a method that takes advantage of the fact that a person speaks less that 40 percent of the time in normal conversation by turning the transmitter off during silence periods. The benefit of DTX is that power is conserved at the mobile unit.

An important component of DTX is Voice Activity Detection. The mobile station distinguishes between voice and noise inputs. The task is not trivial considering effects of background noise. If a voice signal is misinterpreted as noise, the transmitter is turned off and a very annoying effect called clipping is heard at the receiving end. If, on the other hand, noise is misinterpreted as a voice signal too often, the efficiency of DTX is dramatically decreased. Another factor to consider is that when the transmitter is turned off, there is a very silent silence heard at the receiving end, due to the digital nature of GSM. To assure the receiver that the connection is not dead, comfort noise is created at the receiving end by trying to match the characteristics of the transmitting end's background noise.

Figure 4A illustrates a prior art GSM timing diagram for two consecutive frames, 550 and 502, on the traffic channel of a GSM enabled mobile station. The timing diagram is referenced to the receive slot 512 assigned to the mobile station. The slots sequentially numbered for the purposes of explanation and the disclosure is not limited to having a receive slot as the first slot in the frame.

The mobile station is configured prior to the receive slot 512 and is configured to receive data, such as voice data, during the approximately 577 μs duration of the receive slot 512. The mobile station then needs to be configured for the assigned transmit slot provided the mobile station is not operating in DTX mode. As described above, the transmit slot typically occurs three slots after the receive slot 512. However, the mobile station can be controlled to transmit earlier to compensate for propagation delays.

In order to configure the radio for the GSM transmit signal, the mobile station typically tunes the LO frequencies and can tune other variable elements, such as filters or amplifiers. A typical LO settling time is 400 μs. Therefore the mobile station includes a transmit configuration period 520 that may have a duration of 400 μs. Once the transmit configuration period 520 is complete, the mobile station can operate the transmit period 522 that can be of 577 μs duration. Because of the potential for timing advance, the transmit configuration period 520 can begin as early as the second slot, that is, during the slot immediately following the receive slot 512.

Following the transmit period 522, the mobile station can be configured to perform neighbor searching and monitoring. The mobile station can be configured, for example, to search or monitor one neighbor candidate per frame. The mobile station configures the radio for the neighbor base station being monitored. The mobile station tunes the radio during a monitor configuration period 530 that is typically the same duration as other configuration periods.

The mobile station may be configured to perform neighbor monitoring during the seventh slot, or six slots following the receive slot 512. Thus, the mobile station may configure the radio during a monitor configuration period 530 that occurs in the sixth slot, that is, occurring five slots after the receive slot 512. The monitor period 532 can occur immediately following the monitor configuration period 530 and may last for a duration that is less than the duration of a burst. As discussed above, the monitor period 532 may, for example, have a duration of 300 μs. During the final slot of the frame the mobile station is configured for the next receive slot 512. Thus, the mobile station configures itself during a receive configuration period 510. The mobile station can repeat the process for the next frame.

In a Bluetooth communication system the mobile stations and other enabled devices do not constantly use one frequency channel for transmission and reception in a time division multiple access manner. The Bluetooth standard also defines a combination of Time- and Frequency-Division Multiple Access (TDMA/FDMA). A Bluetooth transceiver utilizes frequency hopping to reduce interference and fading. The channel is represented by a pseudo-random hopping sequence hopping through 79 or 23 RF channels depending on the country. The hopping sequence is unique for the PAN and is determined by the Bluetooth device address of the master. The phase in the hopping sequence is determined by the Bluetooth clock of the master. The channel is divided into time slots where each slot corresponds to an RF hop frequency.

Consecutive hops correspond to different RF hop frequencies. The nominal hop rate is 1600 hops/s. Typically, all Bluetooth devices participating in the PAN are time and hop synchronized to the channel. The channel is divided into time slots of 625 μs in length. In the time slots a master and slave can transmit packets. There are two types of links that can be established between the master and the slave: Synchronous Connection-Oriented (SCO) link and Asynchronous Connection-Less (ACL) link.

The SCO link is a point-to-point link between a master and a single slave in the PAN. The master maintains the SCO link by using reserved slots at regular intervals. As the SCO link reserves slots, it can be considered as a circuit-switched connection between the master and the slave. The SCO link typically supports time-bounded information such as voice. The master can support up to three SCO links to the same slave or to different slaves. A slave can support up to three SCO links from the same master or two SCO links if the links originate from different masters. SCO packets are never retransmitted.

The ACL link is a point-to-multipoint link between the master and all the slaves participating on the PAN. In the slots not reserved for the SCO links, the master can establish an ACL link on a per-slot basis to any slave, including the slave devices already engaged in an SCO link. The ACL link provides a packet-switched connection between the master and all active slaves participating in the PAN. Both asynchronous and isochronous, services are supported. Only a single ACL link can exist between a master and a slave. As the ACL links are primarily used for data transmission, packet retransmission is applied to ensure data integrity.

The data on the PAN channel is conveyed in packets. Each packet consists of three entities: the access code, the header, and the payload. The access code and header are of fixed size, either 72 bits or 54 bits. The payload can range from zero to a maximum of 2745 bits. The access code identifies all packets exchanged on the channel of the PAN. All packets sent in the same PAN are preceded by the same channel access code.

The Bluetooth audio-interface can use either a 64 kb/s log PCM format, A-law or μ-law compressed, or a 64 kb/s CVSD (Continuous Variable Slope Delta Modulation) format.

Figure 4A also shows a timing diagram of a mobile station configured according to the disclosure aligned with the prior art GSM timing diagram. The Bluetooth communication system is typically not synchronized to the time slots of the GSM communication system, other than being occasionally synchronized due to a coincidence of the two system timing.

However, the timing diagram of Figure 4A shows the two systems synchronized at the beginning of the receive slot 512 of the first GSM frame for purposes of explanation. The mobile station is not simultaneously configuring itself for both communication systems. Rather, the independent timing diagrams are used to explain the timing of one communication system relative to the other. The Bluetooth timing diagram begins with the mobile station already configured for the master to control the communication channel.

The master transmission period 542 occurs during a first Bluetooth timing slot and can have a duration, for example, of approximately 312 μs. The mobile station needs to be configured before the slave transmission period 552 can occur. The mobile station can reconfigure the radio during a slave configuration period 550, that may occur in a duration of approximately 160 μs. Thereafter, the mobile station can transmit or receive during the slave transmission period 552.

If the mobile station is configured as the master device, the mobile station transmits during the master transmission period 542 and receives during the slave transmission period 552. Alternatively, if the mobile station is configured as a slave device, the mobile station receives during the master transmission period 542 and transmits during the slave transmission period 552.

The mobile station can continue to configure the radio and alternately communicate over a master transmit period 542 or slave transmission period 552. Because the Bluetooth system timing is not synchronized to the GSM system timing, the GSM frame transition has no effect on the Bluetooth system timing.

As can be seen from the timing diagrams, the prior art GSM timing does not provide a sufficient time to allow the GSM system timing to be interleaved with a master and slave transmission pair to support the Bluetooth system.

Figure 4B is a timing diagram of an embodiment of the single radio multiple standard mobile station. The timing diagrams illustrate how the mobile station can be configured to allow GSM and Bluetooth timing to be interleaved. The mobile station timing for two consecutive frames, 500 and 502, within the GSM system is shown in Figure 4B as was shown in Figure 4A. Again the frame timing is shown referenced to the beginning of a receive slot 512.

However, the mobile station radio configuration timing is optimized to allow for the frame timing illustrated in Figure 4B. In the GSM timing diagram of Figure 4B, the monitor configuration period 530 is optimized to approximately 160 μs, far less than the 400 μs period of the prior art mobile station. The shorter monitor configuration time allows the mobile station to fit both the monitor configuration period 530 and monitor period 532 in the period of a single slot. The mobile station can position the monitor configuration period 530 and monitor period 532 in the slot immediately following the receive slot 512. Because each slot is of approximately 577 μs duration, the monitor configuration period 530 can be as long as 277 μs and still allow sufficient time for a 300 μs monitor period 532.

Therefore, after the receive slot 512, the mobile station configures the radio for a monitor period 532. The mobile station timing permits both the monitor configuration period 530 and the monitor period 532 to occur in the time slot immediately following the receive slot 512.

After the monitor period 532 the mobile station can configure the radio during a transmit configuration period 520. As with the case of the monitor configuration period 530, the mobile station can have an optimized transmit configuration period 520 having a duration of approximately 160 μs. The shortened transmit configuration period 520 allows the mobile station to configure the radio in the portion of the third slot not occupied by a timing advanced transmit period 522. The mobile station can then ensure that the transmit period 522 will complete before the end of the fourth timing slot. Because the receive configuration period can occur during the last slot of the frame, the mobile station radio can be idle for slots 5 through 7 of the GSM frame.

The timing diagram for the Bluetooth communication system from Figure 4A is reproduced below the GSM system timing diagram. As can be seen, the period defined by GSM timing slots 5-7 are sufficient to allow interleaving of a master and slave transmit period pair, 542 and 552, and the associated configuration periods, 540 and 550. From the Bluetooth standard, a Bluetooth master must transmit immediately 1 slot before it can receive from a slave in an ACL link.

Figure 4C is a timing diagram of an embodiment of the single radio multiple standard mobile station operating in a GSM DTX mode. Two successive GSM frames 500 and 502 are shown referenced to the start of the receive slot 512. Because the mobile station is configured for DTX operation, there is no transmit period or the accompanying transmit configuration period. Instead, each GSM frame for DTX mode includes the receive slot 512 in the first slot followed by the monitor configuration period 530 and monitor period 532 positioned in the second slot. The receive configuration period 510 occurs in the final slot prior to the next frame. Thus, in DTX mode, slots 3 through 7 of a GSM frame are empty and can be used for other supported communication systems.

The timing diagram of the mobile station configured for the Bluetooth communication system is again replicated below the GSM timing diagram. From the timing diagram of Figure 4C, it can be seen that the idle slots of the GSM timing easily allow a master and slave transmission period pair 542 and 552 and their associated configuration periods, 540 and 550, to be interleaved within GSM slots 3 through 7. Depending on the time offset between the two systems. the GSM DTX timing can allow one master and slave transmission period pair 542 and 552 or can allow up to two consecutive master and slave transmission period pairs 542 and 552.

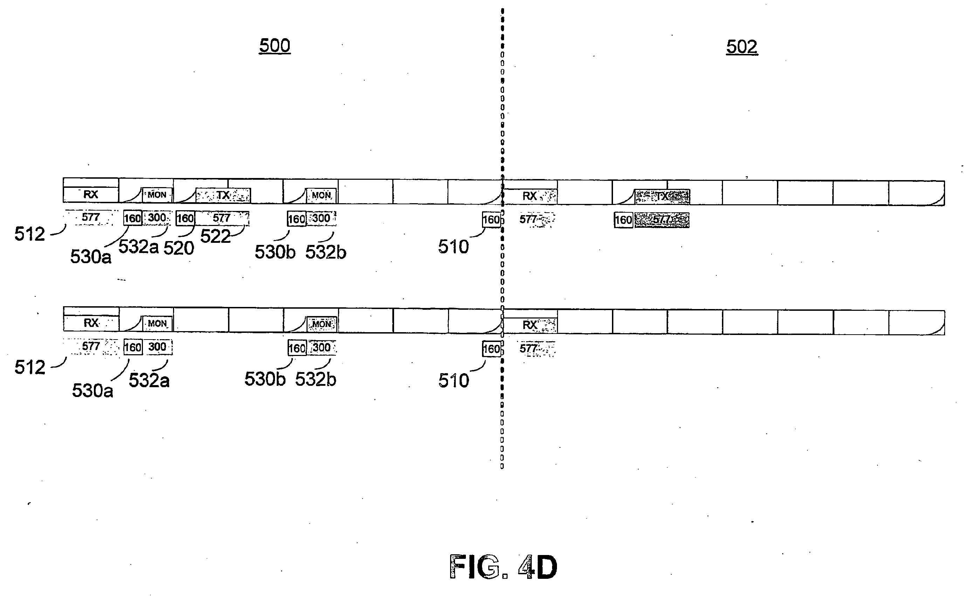

Figure 4D is a timing diagram of another embodiment of a mobile station configured to support multiple communication systems. A timing diagram is shown for the mobile station operating in continuous transmission mode and another timing diagram is shown for the mobile station operating in DTX mode. Two successive GSM frames 500 and 502 are shown referenced to the start of the receive slot 512.

The mobile station is configured to perform two monitoring functions in the first frame 500 and is configured not to perform the monitor function in the subsequent second frame 502. Thus, the overall rate of monitor functions performed by the mobile station remains the same, but is performed twice in one frame, such as the first frame 500 and omitted in the next or second frame 502.

The mobile station thus includes a receive slot 512 followed by a first monitor configuration period 530a. The mobile station then is configured to monitor a first neighboring base station in a first monitor period 532a. At a later time slot, the mobile station configured the radio in a second monitor configuration period 530b and monitors another base station in a second monitor period 532b.

The advantage of positioning two monitor periods 532a and 532b in the same first frame 500 is that there may be additional time in the subsequent second frame 502 to support another communication system. When operating in continuous transmission mode, the second frame 502 has GSM idle time in slots 5 through 7, which is the same as for single monitor periods. However, by performing a dual monitor frame, the mobile station is idle for GSM time slots 2 through 7 when operating in DTX mode. Thus, it may be advantageous to perform dual monitoring for those conditions where DTX operation is known or probable.

As discussed above, the mobile station may support more than two communication systems. For example, the mobile station may also be configured to support a WLAN system, such as a WLAN operating in accordance with the IEEE 802.11 standard.

In a WLAN, wireless communication links are used as a transmission medium to exchange data between various stations. Due to the nature of wireless communications, it is difficult to physically detect a collision event when multiple stations transmit data frames at the same time. As a result, a typical WLAN protocol requires each frame transmission to be acknowledged by the receiver. In response to a received DATA frame, the receiver transmits an acknowledgement (ACK) frame, which indicates to the original transmitter that the data frame was received without errors. Accordingly, the transmitter assumes that no significant collision event happened during the DATA frame transmission. If the ACK frame is not received, the transmitter assumes that some collision event causes the DATA frame to be lost.

In contrast to wired devices, stations of a wireless network typically do not listen to their own transmission, and are therefore unable to employ medium access control schemes such as Carrier Sense Multiple Access with Collision Detection (CSMA/CD) in order to prevent simultaneous transmission on the channel. The IEEE 802.11 standard describes a Carrier Sense Multiple Access with Collision Avoidance (CSMA/CA) mechanism, using a randomized exponential backoff rule to minimize the likelihood of transmission collision.

For example, a successful transmission of a DATA frame from Station A to Station B results in Station B acknowledging the reception by sending an ACK frame. In the case of a collision event caused by simultaneous transmission of DATA frames by Station A and some other station sharing the channel, Station B does not receive data. In such as condition both Station A and Station C will assume that a collision has taken place because neither of them will receive an ACK frame from their intended receivers.

Station A may retry to send its DATA frame to Station B after some backoff time. However, a collision with a DATA frame from Station C may again prevent Station B from receiving information. If no acknowledgement is sent, Station A must repeat its DATA frame again. After a number of retry attempts the transmission maybe successful, and Station B responds with an ACK frame.

A collision event caused by multiple stations competing for a shared network usually occurs at the beginning of transmission. Because the Medium Access Protocol indicates to stations on the network that the medium is free at approximately the same time, any stations with pending transmissions will begin to transmit at approximately the same time. When this occurs, the resulting transmissions will have a collision event that physically begins at or near the beginning of the transmission. However, the transmitting device is unaware of the occurrence of the collision until it has completed its attempt to transmit the DATA frame, and does not receive the expected ACK frame.

Thus, the collision event cannot be detected until the end of the transmission attempt. The longer the DATA frame, the longer it will take for the transmitting station to determine that the collision event has occurred. Upon detection of a collision, the stations will each wait a random time, referred to as a backoff time, before attempting to retransmit the DATA frame. Each time a DATA frame fails transmission, the average random time waited can increase in an exponential fashion before attempting retransmission.

If a collision event occurs at or near the beginning of a long DATA frame, most protocols and physical implementations render the entire DATA frame unreceivable. Therefore, the portion of the DATA frame after the beginning of the collision event wastes network bandwidth. The sooner a collision can be detected by a transmitter, the sooner the transmitter can end the faulted transmission and stop wasting network bandwidth.

In the case of a bit error due to noise, the bit-error rate (BER) of the system is relatively fixed for a given signal/noise ratio. As this ratio changes, the BER may increase or decrease. Because of the fluid nature of the radio environment, the noise and hence the signal/noise ratio is constantly changing. When the noise increases, the probability that a frame transmission experiences an error will increase.

Because of the presence of a changing noise factor, many WLANs employ yet another mechanism intended to improve their performance. That mechanism is the ability to fragment frames. Before transmission, a transmitter may divide a larger DATA frame into smaller DATA frames sent one at a time. The receiver must re-assemble the smaller DATA frames back into the original DATA frame. Each of the smaller DATA frames can be referred to as a DATA fragment. Network throughput may be improved when fragmenting is performed because when the BER is high, a long DATA frame will have a greater probability of containing at least one error. In most WLAN systems, there is no recovery from the presence of even a single bit error, and hence, the entire DATA frame must be ignored. Thus, the receiver does not generate an ACK frame and the transmitter must assume that a collision has taken place. The transmitter thus waits for a backoff period and reschedules the DATA frame transmission attempt. The unsuccessful DATA frame transmission represents lost network bandwidth. In addition, it may be likely that the long DATA frame may encounter a single bit error on successive attempts, and even more bandwidth is lost.

If a DATA frame is divided into smaller fragments, typically a subset of the fragments will contain a single bit error, and only these fragments will need to be retransmitted. Therefore, the lost network bandwidth can be substantially reduced.

In the case of DATA frame fragmentation, each DATA fragment sent by a transmitting station is acknowledged by an ACK frame produced by a receiving station. Each DATA fragment and ACK frame can contain airtime reservation duration information, which allows the station sending the DATA frame fragments to prevent other stations from data transmission during the indicated airtime reservation interval.

The total time required to transmit a fragmented DATA frame is greater than the time required to send a single long DATA frame, because each DATA fragment contains headers and trailers representing its physical layer and its medium access control protocol layer. Moreover, each DATA fragment is individually acknowledged, and interframe spaces exist between each fragment and ACK frame.

However, if a long DATA frame had a reasonable probability of being retransmitted, then the total time required to perform the multiple transmission attempts of the single long DATA frame can be larger than the total time required for transmission of all of the shorter DATA fragments including the additional overhead, the additional ACK frames, and the interframe spaces, even if some of the DATA fragments were retransmitted.

A typical WLAN has the ability to set a fragmentation threshold equal to the minimum length of a DATA frame subject to fragmentation. Any DATA frame having length that exceeds this fragmentation threshold is divided into fragments having length less than the fragmentation threshold.

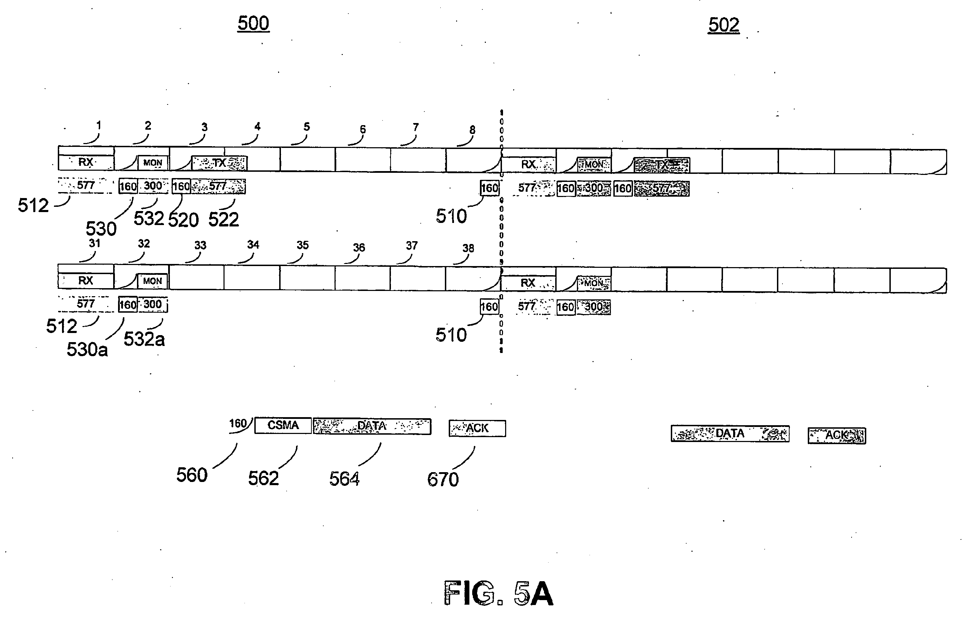

Figure 5A is a timing diagram of an embodiment of a mobile station configured for multiple standard time interleaving. The timing diagrams of Figure 5A show the mobile station timing for GSM operation and the timing for WLAN operation such as in an IEEE 802.11 system.

The GSM timing diagrams show two successive GSM frames referenced to the beginning of the receive slot 512. The two GSM timing diagrams show the mobile station configured for continuous transmission operation and for DTX operation. As in the previous timing diagrams, the receive slot 512 is followed by a monitor configuration period 530 and monitor period 532 in the next time slot.

For continuous transmission mode, the mobile station then configures the radio for transmission during a transmit configuration period 520 and transmits data during a transmit period 522. The DTX mode lacks the transmit period 522 and associated transmit configuration period 520.

A WLAN DATA frame 564 and ACK 670 can fit into GSM slots 5 through 7. The mobile station has additional time in the GSM frame when the GSM mobile station operates in DTX mode. In DTX mode, GSM slots 3 through 7 are available for the WLAN system.

The mobile station configures the radio during a WLAN configuration period 560 during which the mobile station switches from GSM mode to WLAN mode. As before, the WLAN configuration period 560 can take approximately 160 $\mu$s.

After WLAN configuration period 560, the mobile station can select an available WLAN transmission slot in the time period of the GSM timing occurring prior to the next receive configuration period 510. Typically the WLAN transmission slot spacing is 20 $\mu$s for IEEE 802.11b. The time available for WLAN transmissions should account for the CSMA period 562, the DATA frame 564, and the subsequent ACK 670.

Before the mobile station can transmit WLAN data, it listens to the channel for a CSMA period 562 to determine if the channel is clear. Typically, the CSMA period 562 is a listening duration on the order of approximately 50 $\mu$s. Once the mobile station determines the channel is clear, it can transmit the DATA frame 564.

If the mobile station determines that the channel is not clear, it can wait and try to transmit after a backoff period. The mobile station can be configured to determine a random backoff period or can be configured to determine a random backoff period that will place the next transmit attempt in a time slot at which the mobile station is not supporting other communication systems. Thus, where the mobile station is concurrently supporting active GSM and WLAN communications, the mobile station may generate a WLAN backoff period that is in terms of GSM frames, such that a next transmit attempt will occur within the idle GSM slot of a subsequent GSM frame.

The mobile station can determine the time available from the start of the DATA frame to the beginning of the receive configuration period 510. The mobile station can then determine a time available for the DATA frame by subtracting from the total available time the time needed for the ACK 670 and an estimated time for an interframe space that typically exists between each data fragment and the ACK 670. The mobile station can then fragment the data into one or more DATA frames 564 that fit within the available time.

The mobile station monitors for an ACK 670 transmitted by a wireless access point following each DATA frame 564. If the mobile station does not receive the ACK 670 or the original transmission was blocked by a busy channel, the mobile station can be configured to attempt a new transmission slot during the remainder of the GSM Idle time, provided there remains a sufficient time to receive an ACK 670. When the mobile station is not transmitting, it can be configured to listen to the wireless channel for WLAN packets transmitted during the GSM idle time.

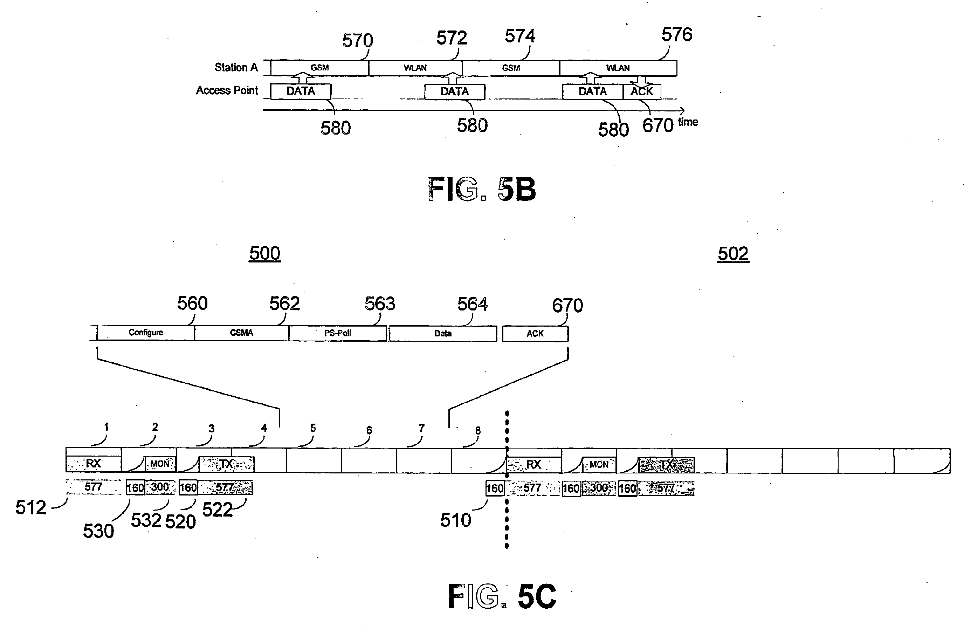

In general, a WLAN access point is unable to determine when the mobile station implementing time interleaving of multiple communication systems in a single radio is configured to support a communication system other than the WLAN. Thus, communications between a WLAN access point and the mobile station may be sub-optimal. Figure 5B is a timing diagram of an embodiment of a mobile station configured to concurrently support GSM and WLAN using time multiplexing of a single radio. The timing diagram shows the mobile station configured to support a GSM communication system in a first period 570 and a third period 574. The mobile station is configured to support a WLAN system during second and fourth periods 572 and 574.

As can be seen from the timing diagram, using CSMA, a WLAN access point can determine that the WLAN channel is open and that the mobile station is currently not transmitting on the WLAN channel. However, using CSMA, the access point may be unable to determine that the mobile station is currently configured to support some other communication system, such as the GSM system. The access point may attempt to transmit a data packet 580 to the mobile station during a period 570 in which the mobile station is configured to support the GSM system.

Because the mobile station is not configured to listen to the WLAN system during the first period 570 when it is busy supporting the GSM system, the mobile station will likely not be aware of the transmission and thus the transmission will be lost. The mobile station will not generate an ACK, and the access point will determine that no ACK was sent by the mobile station.

The access point may then wait for some backoff time and attempt to retransmit the data packet 580. The second attempt may, for example, begin during a period 572 when the mobile station is configured for the WLAN system, but may extend into the period 574 in which the mobile station configures the radio and supports the GSM system. Thus, the packet will again be corrupted and lost. The mobile station will not generate an ACK and the access point will determine the packet was lost and attempt retransmission.

After another backoff period, the access point may again attempt to retransmit the data packet 580. If, by chance, the mobile station is configured in the period 576 to support the WLAN, it may receive the data packet 580 and generate an ACK 670. This random occurrence of successful data transmission can substantially decrease the data throughput of the WLAN system.

Communications devices in general and WLAN enabled devices such as the mobile station, in particular, expend energy when transmitting and receiving. During transmission, the mobile station uses power to run its internal analog and digital circuits to code and modulate the WLAN signal. The mobile station also uses power and to radiate or otherwise transmit a signal. When a mobile station is receiving, it uses power to demodulate and decode the signal. Also, a mobile station uses power in receive mode to listen to the channel even if a signal is not being transmitted to it. The mobile station may listen to the WLAN channel determine if a receive signal is directed to the mobile station or some other device. Typically, a significant portion of a power is used for this active listening purpose.

The mobile station can increase WLAN access point's success of data transmissions by notifying the access point that it is a multi-mode device. The mobile station can, for example, transmit a mode message to the access point indicating that it is operating in multiple communication mode. The WLAN access point can then improve the success rate of data transmissions by configuring its transmit data packet or frame based in part on the message, such as by increasing its data rate and/or decreasing its fragmentation threshold. Both of these mechanisms can reduce the duration of a data packet and thus, the data packet will have a higher likelihood of successful transmission. In addition, if the WLAN access point is informed that it is communicating with a multi-mode station, the access point can reduce its contention window allowing more rapid retranmissions. This technique will increase the efficiency of access point transmissions to a multi-mode station.

The mobile station and WLAN access point can improve the success rate of data transmissions and can improve the data throughput by supporting polling in the access point, such as by supporting a PS-Poll command in the access point. The IEEE 802.11 provides a polling mechanism where the mobile station or WLAN device in general can request data from an access point. If the access point has data queued for the mobile station, the access point can respond to the request by sending data to the mobile station. The retrieval command in IEEE 802.11 systems is referred to as a Power Save Poll or PS-Poll. Using the PS Poll command, the mobile station does not need to continuously or periodically monitor the WLAN channel in order to the probability of missing messages transmitted by an access point.

To retrieve queued data from an access point, the mobile station transmits a PS-Poll command and the access point replies with a data packet, such as a DATA frame. The mobile station can acknowledge successful receipt by transmitting an ACK. The access point and mobile station can repeat the data transmission receipt and acknowledge sequence until all of the data from the access point has been communicated to the mobile station or until some other event terminates the sequence.

In an IEEE 802.11 WLAN, the PS-Poll command can be 20 bytes long and an ACK can be 14 bytes long. As noted earlier, the DATA frame can have a variable length. The duration of a transmission may also depend on a modulation type. In IEEE 802.11b a frame can be transmitted at approximately 11 Mbits per second but in IEEE 802.11g data can be transmitted at 54 Mbits per second. In addition, a preamble and a header are typically attached to the frame and thus further increases the transmission duration. The preamble and header are dependent on each particular standard and mode of operation. In between frames, the WLAN also has intervals referred to as InterFrame Spacing (IFS) whose duration depends on the particular standard.

Figure 5C shows a timing diagram of a mobile station configured to support GSM and WLAN communication systems and configured to use the PS-Poll command. To support the polling command, the mobile station can request that the access point queue data that is to be sent to the mobile station. The access point may, for example, store the data in a buffer.

The timing diagram for the mobile station supporting GSM system over two frames 500 and 502 is shown in Figure 5C as was previously shown in Figure 5A. The mobile station is configured to support the GSM system in time slots 1-4 and 8 of the GSM frame. Thus, the mobile station has a GSM idle period in GSM time slots 5-7 available to support the WLAN system.

During the GSM idle period, the mobile station can be configured to request any queued data from the access point. During the GSM idle period, the mobile station can tune the radio in a WLAN configuration period 560. The mobile station can then listen to the channel for a CSMA period 562 to determine if the channel is clear. If the channel is clear, the mobile station can transmit a PS-Poll command 563 to the WLAN access point.

In response to the PS-Poll command 563, the access point can transmit queued data to the mobile station. The mobile station can receive the one or more DATA frames 564 and can respond by sending an ACK 670 in response to successfully receiving DATA frames 564. The number and size of the DATA frames 564 can be configured to allow provide enough time for the mobile station to respond with an ACK 670 before the next configuration period of the GSM system. The access point may need to account for overhead time to process signals as well as WLAN InterFrame Spacings (IFS) when determining an available data duration.

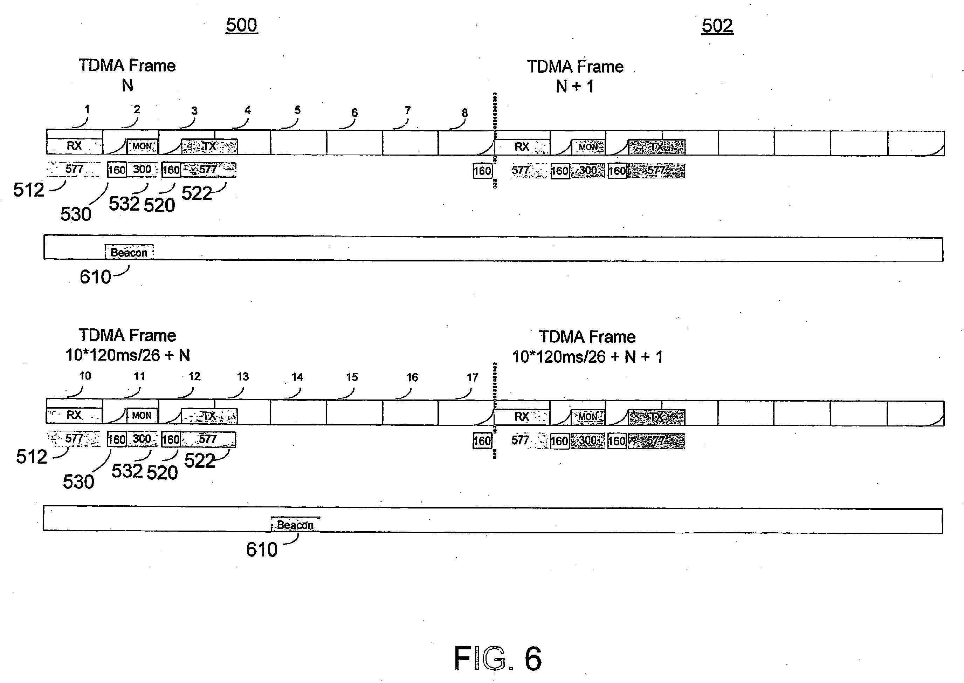

Figure 6 is a timing diagram of an embodiment of a mobile station configured for multiple standard time interleaving. The timing diagrams of Figure 6 show the mobile station timing for two different conditions. The first condition shows the timing diagram of the mobile station operating in GSM mode with a WLAN beacon signal transmitted during a time period in which the mobile station is active in GSM mode. The second condition shows the timing diagram of the mobile station operating in GSM mode with a WLAN beacon signal transmitted during a time period in which the GSM mode is idle.

As described above, if the mobile station is not actively transmitting a WLAN signal, it can be configured to listen for WLAN packets. Mobile station GSM slot timing shown in Figure 6 illustrates GSM bursts covering the first four slots (1-4) within a first TDMA frame 500. As described earlier, the GSM frame includes eight slots (1-8). The timing diagram for the WLAN beacon shows a WLAN beacon transmission 610 coincident with a second GSM slot.

A WLAN beacon interval can be predicted as 10*(120ms/26) + 3*(120ms/208). Thus, the next WLAN beacon transmission 610 will occur during a TDMA frame (10*120/26 + N), where N represents the frame number of the GSM frame in the first condition and offset by approximately 3*(120ms/208). The next WLAN beacon transmission 610 thus occurs in another GSM frame approximately 46 frames after the previous frame having a WLAN beacon signal.

However, because of the additional offset, the WLAN beacon transmission 610 will be coincident with the fifth slot, which represents a GSM slot not containing a mobile station GSM burst. The beacon interval is offset by approximately three slots between TDMA frames from occurrence to occurrence. Thus the mobile station has a probability that at least one beacon will be detected out of every three transmissions. The probability of success increases if the mobile station operates in DTX mode.

Figures 4-6 have illustrated timing diagrams for the condition of the mobile station concurrently supporting two communication systems having different communication protocols and different system timing. In figures 4-6, the GSM system timing has higher priority, or is ranked higher in a hierarchy, than the Bluetooth PAN system or the IEEE 802.11 WLAN system.

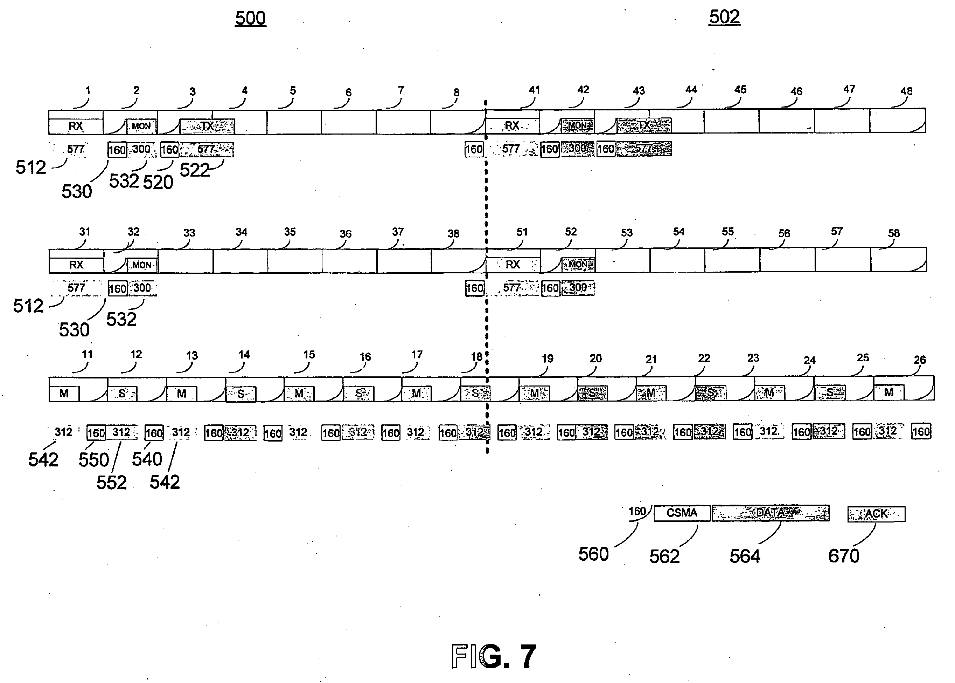

Figure 7 is a timing diagram of a mobile station configured to concurrently support three different communication systems. The mobile station can be configured to concurrently support GSM, Bluetooth PAN, and WLAN systems.

The mobile station can also be configured, for example, to prioritize the communications in the order of GSM, Bluetooth, and WLAN. The mobile station may rank GSM highest in the hierarchy, in part, because of the strict timing constraints defined in the GSM standard. Additionally, the mobile station may rank Bluetooth next in the hierarchy, in part, because a common mobile telephone application uses Bluetooth communications to communicate GSM telephone data to a wireless headset. Of course, the mobile station can implement other communication system hierarchies. Additionally, the mobile station may support some other combination of communication systems and have another hierarchy based on the choice of supported communication systems.

Figure 7 shows the mobile station timing diagrams for two successive GSM frames, as previously discussed. A timing diagrams is shown for the mobile station configured for continuous transmission and DTX transmission. Also, a timing diagram for the mobile station configured for Bluetooth is shown below the GSM timing diagrams. The timing for the WLAN communication system is shown below the Bluetooth timing diagram and positioned in the second GSM frame.

As discussed above in relation to Figures 4B-4C, a Bluetooth master transmission period 542 and Bluetooth slave transmission period 552 pair can fit into the GSM idle time slots 5, 6, 7. From the Bluetooth standard, a Bluetooth master must transmit immediately 1 slot before it can receive from a slave in an ACL link. For a mobile station operating in GSM DTX mode, even more time is available for the mobile station to support the Bluetooth system and transfer information with a slave device.

Additionally, as shown in Figure 7, a WLAN DATA frame 564 and ACK 670 can fit into the GSM idle time slots 5, 6, and 7. However, the mobile station may be configured to support an active Bluetooth master and slave transmission period pair 542 and 552. Additionally, the mobile station can configure the Bluetooth system to be higher priority. Therefore, the mobile station may allocate the GFSM idle slots in the first frame 500 of the GSM system to support the Bluetooth communication system.

Additional GSM idle time is available in slots 5-7 of the next the GSM time frame in the second frame 502. If the mobile station is not configured to support Bluetooth communications during the GSM idle time, the mobile station may allocate the time to support WLAN communications. The mobile station can then transmit or receive over the WLAN.

The mobile station reconfigures the radio in a WLAN configuration period 560 that takes approximately 160 μs. After this reconfiguration time, the mobile station can determine and select an available WLAN transmission slot from those which exist within the GSM idle time slots. The mobile station selects the WLAN slot provided the transmission slot has enough remaining time in the GSM idle window to complete the transmission, receive the ACK 670, and to switch back to GSM mode in a receive configuration period 510.

Typically the WLAN transmission slot spacing is 20 us for 802.11b. But before the mobile station can transmit WLAN data, it first listens to the channel to determine if the channel is clear. Typically, this listening duration is on the order of 50 us. Once the mobile station has determined the channel is clear, it transmits. Later it receives the ACK 670 from a WLAN access point. If it does not receive the ACK 670 or the original transmission was blocked by a busy channel, the mobile station picks a new transmission slot from the remaining GSM idle time to attempt a transmission. When the mobile station is not transmitting, it can listen to the channel for WLAN packets during the GSM idle time.

A multimode mobile station may also implement other changes that can optimize concurrent support of multiple communication systems. The above description focused on a single radio approach. However, some additional features can be implemented in multi-radio configurations as well as single radio configurations. For example, the single radio mobile station embodiment can be optimized for concurrent GSM and Bluetooth operation as described below. However, the optimization of concurrent GSM and Bluetooth operation can also be applied to multi-radio mobile stations.

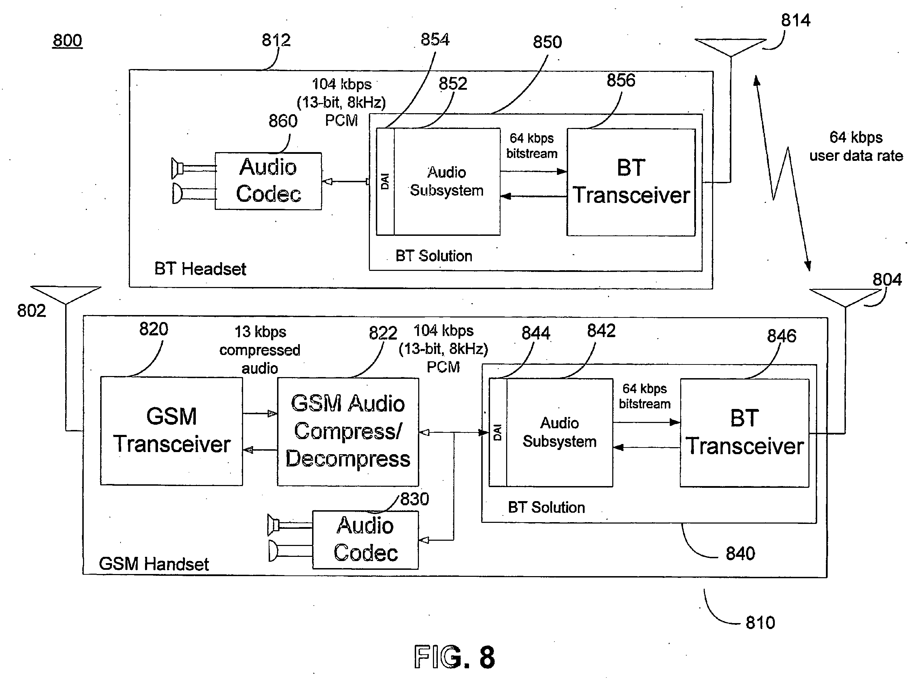

Figure 8 is a functional block diagram of a system 800 having a mobile station 810 in communication with a Bluetooth device 812. The mobile station 812 can be a multimode mobile station configured for concurrent communication links with a GSM communication system and a Bluetooth system. The mobile station 810 can be, for example, the prior art multiple radio mobile station 200 of Figure 2A or the single radio mobile station 100 of Figures 2B-2D.

The mobile station 810 can include an antenna 802 configured for GSM operation. The GSM antenna 802 can be coupled to a GSM transceiver 820 that is configured to convert received signals to baseband signals and convert baseband signals to transmit signals. The GSM transceiver 820 can interface with audio signals that are compressed according to a GSM audio compression algorithm. The compressed audio can be coupled to or from a GSM compression module 822 configured to perform audio compression or decompression, depending on the direction of the link.

The GSM compression module 822 can be coupled to an audio CODEC 830. The audio CODEC 830 can be configured to decode the audio from the GSM compression module 822 and couple the decoded audio to an output, such as a speaker. Alternatively, the audio CODEC 830 can interface with an input device, such as a microphone, and can code the audio and couple the coded audio to the GSM compression module 822.

The GSM compression module 822 can also be coupled to a Bluetooth module 840 configured to interface the mobile station 810 with a Bluetooth device 812. The Bluetooth module 840 can include a digital audio interface (DAI) 844 that interfaces with the GSM audio compression module 822.

The DAI 844 also interfaces with a Bluetooth audio subsystem 842 that is configured to compress or decompress the audio according to the Bluetooth standard. The Bluetooth audio subsystem 842 is coupled to a Bluetooth transceiver 846 that in turn is coupled to an antenna 804 configured to support the Bluetooth bands.

The mobile station 812 can communicate with the Bluetooth device 812 over a wireless channel. The Bluetooth device can be, for example, a wireless headset configured to provide a wireless audio interface to the mobile station 810. The Bluetooth device 812 includes an antenna 814 to interface with the wireless channel. The antenna 814 can be coupled to a Bluetooth module 850 that is configured similarly to the Bluetooth module 840 in the mobile station 810.

A Bluetooth transceiver 856 interfaces with the antenna 814 and a Bluetooth audio subsystem 852. The Bluetooth audio subsystem 852 couples to a DAI 854 that in turn can be coupled to an audio CODEC 860.

Due to the complex nature of the timing between TDMA frames in a GSM network and slots in a Bluetooth connection, introducing a shared radio resource integrated into both GSM and Bluetooth systems requires the establishment of a timing algorithm that depends on both the timing of TDMA frames and Bluetooth slots to assign the resource to each communication channel. Because of the size and complexity of the GSM network as compared to a simple Bluetooth connection, it may be appropriate to accept the timing of the TDMA frame as immutable and assign the shared resource to the Bluetooth connection during the remaining time.

The established SCO audio link used in the Bluetooth device 812 can support a 64 kbps voice-data stream. The timing of an SCO link does not allow easy interleaving with GSM network activity. Additionally, the reduced time that the resource is available for Bluetooth connections limits the available Bluetooth bandwidth to less than 64 kbps. Thus, a logical link other than SCO is preferable to carry the audio data. It is desirable for the audio stream to communicate with less than 64 kbps.

Simulations of a time-interleaving scheme that allows a Bluetooth transmission packet and reception packet pair after the GSM transmit slot but before the GSM receive slot, as shown in Figure 4B, reveals that up to about 44 kbps is available for user data. This bandwidth fluctuates over time, with the available bandwidth occasionally dropping to about 34 kbps over a period of three TDMA frames. If the bandwidth is reduced to below 34 kbps, the interleaving scheme could more easily support Bluetooth data. If the bandwidth could be reduced to below about 17 kbps, this scheme could easily support the required audio data rate and may support retransmissions without requiring significant buffering or delay.

An examination of the functional block diagram of the GSM mobile station 810 / Bluetooth device 812 pair shown in Figure 8 shows that incoming voice data in the mobile station 810 is first decompressed in the GSM audio compression module 822 from 13 kbps compressed audio to 104 kbps, and then reconverted to 64 kbps Continuously Variable Slope Delta (CVSD) coded audio in the Bluetooth audio subsystem 842. The mobile station 810 transmits the coded audio to the Bluetooth device 812 that converts the coded audio back to 104 kbps linear PCM. This appears to be a lot of audio processing just to incorporate the 104 kbps standard format.

Figure 8 shows an existing audio compression solution that can be used by a multimode mobile station 810 supporting GSM and Bluetooth communications when communicating with a Bluetooth device 812 such as a Bluetooth headset. The audio compression solution can be used regardless of whether the mobile station 810 is a single radio device or a multiple radio device.

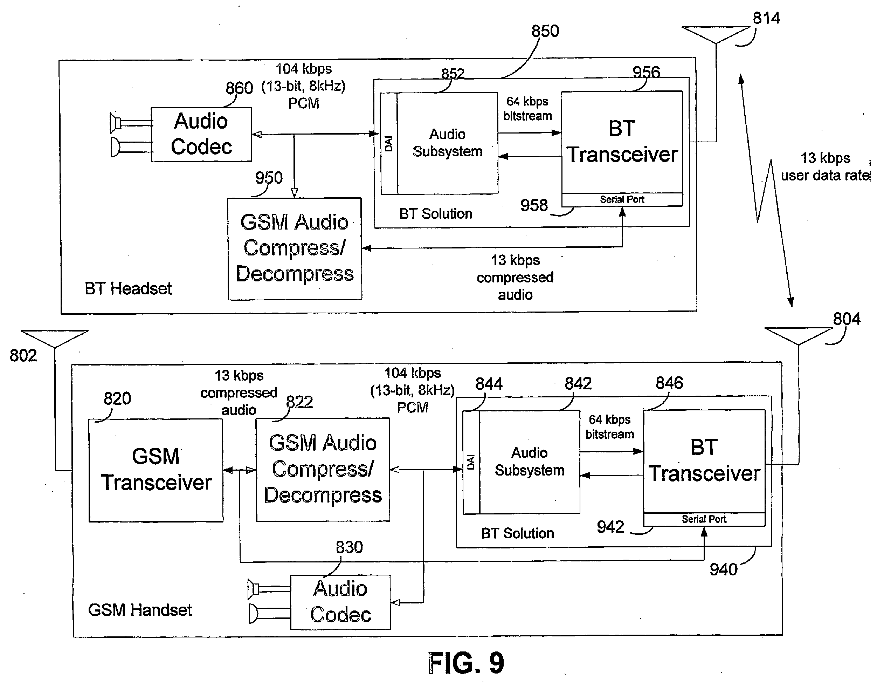

Figure 9 shows a functional block diagram of a system 800 having a mobile station 810 in communication with a Bluetooth device 812 where the mobile station 810 and Bluetooth device 812. The mobile station 800 and the Bluetooth device 812 implement an audio compression solution where GSM audio compression and decompression is integrated into the Bluetooth device 812.

The mobile station 810 is modified to have a data interface, such as a serial interface 942 at the Bluetooth transceiver 946. The serial interface 942 is configured to receive GSM compressed audio from the GSM transceiver 820 and couple it to the Bluetooth transceiver 946. The serial interface 942 allows the data to remain compressed using the GSM compression algorithm when the audio is to be broadcast to a Bluetooth device 812 that is configured to handle GSM compression. The Bluetooth audio subsystem 842 in the mobile station 810 does not need to perform any processing of the GSM compressed data.

The Bluetooth device 812 is configured to receive the GSM compressed audio over the wireless channel. The Bluetooth transceiver 956 in the Bluetooth device 812 includes an output port, which can be a serial port 958, that is configured to couple the GSM compressed audio. The serial port can be configured to couple GSM compressed data to and from a GSM audio compression module 950 in the Bluetooth device 812. When the Bluetooth device 812 receives GSM compressed audio, the serial port couples the audio to the GSM audio compression module 950 where the audio can be decompressed and PCM audio can be recovered. Audio that is to be transmitted to a GSM enabled mobile station 810 can be coupled to the GSM audio compression module 950 where it is compressed. The GSM compressed audio can then be coupled to the serial port 958 of the Bluetooth transceiver 956 to be transmitted to the mobile station 810.

In this case, the audio data would remain compressed at the GSM compression rate of 13 kbps, being communicated between the GSM transceiver 820 and Bluetooth transceiver 946. The Bluetooth transceiver 946 is thus configured to transmit GSM compressed audio over the Bluetooth wireless link. Using GSM compression reduces the required bandwidth over the Bluetooth link below the 34 kbps bandwidth available while resource sharing.

An added benefit is a reduction in the perceived audio delay because the 104 kbps to 64 kbps to 104 kbps processing no longer occurs. Also, since the GSM audio compression module 950 can be implemented as a completely digital core, it may be easily integrated into the Bluetooth baseband processor. In an embodiment, the GSM audio compression module 950 can be implemented in the Bluetooth module 850 next to the present Bluetooth audio subsystem 852, where it can also share the DAI. Adding the GSM audio compression module 950 in addition to the Bluetooth audio subsystem 852 allows the Bluetooth device to continue to support the conventional Bluetooth audio compression using a 64 kbps SCO link.

It may be desirable to avoid transmissions while the shared radio resource on the receiving side is assigned to a non-Bluetooth link, as packets destined for absent receivers just waste battery life of the transmitting device. When a transmission is required of a packet destined for the Bluetooth device 812, which may be a headset configured as a Bluetooth slave device, the mobile station 810 configured as a Bluetooth master device could properly time the transmission and expected return ARQN based upon the availability of the mobile station's 810 shared radio resource. If a retransmission were required due to the failure to receive the expected ARQN, again the mobile station 810 could time the transmission to occur when the radio is not shared by a different link.

For packets transmitted by the Bluetooth device 812 configured as a slave device, the mobile station 810, as master in the Bluetooth connection, would time its polling of the slave device such that the mobile station 810 could reliably expect the data from the Bluetooth device 812 before the shared radio resource in the mobile station 810 is to be assigned to the GSM connection.

Alternatively, the Bluetooth device 812, such as a Bluetooth headset may be the master device and the mobile station 810 may be the Bluetooth slave device. In this embodiment, the Bluetooth device 812 receives timing synchronization information for the shared radio scheduling, which adds some overhead and complexity to the connection. Thus, it may be desirable for the mobile station 810 to be the master device and the Bluetooth device to be the slave device.

The transmit coordination can be performed in two ways. One way is for the time usage of the shared resource in the GSM network to be made available to the Bluetooth Link Controller or Link Manager. This will allow the Link Controller to delay the transmission (or possible reception) of data until the resource is available. This delay can be a fixed number of Bluetooth slots, such that the Bluetooth slot timing is maintained.

A second, less intrusive approach would be for the host application running above the RFCOMM stack layer to reasonably know the latency from when it passes a data message from the audio driver until it is transmitted. Because of the light loading in the Bluetooth processor due to the lower audio bit-rate, this could be identifiable and predetermined during the course of design. A GSM processor in the mobile station 810 can be configured to provide the GSM TDMA frame number (T2) counter to a Bluetooth host application, along with the assigned GSM TDMA slot number. The Bluetooth processor in the mobile station can then determine the Bluetooth Master frame corresponding to the GSM frame after the frame number counter, T2, increments as:

$$96us + (577us * (1 + GSM\ Tx\ slot\ \#))$$

Typically, only 1 Master frame out of every 96 Bluetooth slots will satisfy this criterion and it will be the same frame in every repeating 96 slot sequence. Defining this as "slot 0", the worst-case minimum set of slots available for the Bluetooth connection would be:

{0, 8, 16, 30, 38, 52, 60, 68, 74, 82, 90} of slots {0 : 95}

This function does not take into consideration the Timing Advance of the GSM transmit slot to ensure the least dependence on this GSM network-determined variable. However, in order to increase the slots available to the Bluetooth link, the host application can add slot # 46 when the Timing Advance is greater than 96us, and slot # 24 when the Timing Advance is greater than 192us. Likewise, when discontinuous transmission (DTX) is engaged, more slots are available. The slots are that are usable in DTX mode more than double the available Bluetooth bandwidth. The additional slots are:

{6, 14, 22, 28, 36, 44, 50, 58, 66, 72, 80, 88, 94} of slots {0 : 95}.

Given the "slot 0" as the reference, the slots that the headset can use to transmit to the handset are the slots immediately following the sequence of Master slots, which are slots:

{1, 9, 17, 31, 39, 53, 61, 69, 75, 83, 91} of slots {0 : 95}

The sequences are functions of the Phase Lock Loop (PLL) settling time and Bluetooth packet length. In this case, the Bluetooth packets were assumed to carry a 240 bit payload, using either DH1 or DM1 packets. If the host application reduces the packet size, even more slots may be available.

GSM handovers may require this timing to be reset, because the TDMA slot assigned to the mobile station 810 might change as a result of the handover. The Bluetooth host application in the mobile station 810 should monitor the T2 frame counter, the GSM TDMA slot number, and the Bluetooth slot timing to ensure proper synchronization.

The audio compression solution for the single radio mobile station 810 can be extended to cover 13 kbps compressed voice data transmissions that do not require an ARQN. In this case, the set of usable slot numbers for handset to headset transmission would nearly double.

Thus, a mobile station configured to interleave communications over Bluetooth and GSM systems can prioritize the GSM link over the Bluetooth link, calculate one or more usable Bluetooth slots based upon the above formula, and transmit voice data over a Bluetooth link using GSM compressed-voice techniques.

Timing Interleaving multiple communication systems, such as GSM, Bluetooth, and WLAN, over a single radio can provide an improvement over the prior art. Additionally, configuring a mobile station and Bluetooth device to send GSM voice compressed data over the Bluetooth ACL link can provide additional improvements in communications. Time multiplexing or interleaving multiple communication systems in a single radio mobile station provides a solution to the problem of requiring two or more radios in every mobile station. For example, a single radio can be used in a multimode GSM mobile station, thus reducing the size and cost of GSM mobile stations. In addition, the disclosure provides a bandwidth efficient solution, thereby potentially increasing the density of ISM band users within a certain area. Additionally, it is more power efficient to send compressed GSM voice than Bluetooth audio thus increasing battery life of both the GSM mobile station and Bluetooth headset.

The above description of the disclosed embodiments is provided to enable any person skilled in the art to make or use the disclosure. Various modifications to these embodiments will be readily apparent to those skilled in the art, and the generic principles defined herein may be applied to other embodiments without departing from the scope of the disclosure.

## Claims

1. A method of supporting communications with multiple communication systems in a wireless device, where at least two of the multiple communication systems operate with different communication standards, the method being **characterized by**:

   determining a priority of each active communication link in the multiple communication systems based in part on a predetermined hierarchy;
   configuring a transceiver in the wireless device to time multiplex communications with each active communication link in the multiple communication systems, where the timing of the time multiplex communications with each active communication link is based on the priority of each active communication link;
   wherein configuring the transceiver comprises:

configuring a wireless transceiver for a Time Domain Multiple Access (TDMA) communication system; and configuring the wireless transceiver for a first packet data communication system during at least one idle time slot of the TDMA communication system;

wherein a time reference for the TDMA communication system comprises a reference independent of a time reference for the packet data communication system;

configuring a second wireless transceiver to support a GSM communication link, wherein

configuring a receiver portion of the second wireless transceiver for a GSM receive period occurring in an assigned GSM time slot; and

configuring the receiver portion for a monitor period occurring in a GSM time slot immediately following the GSM receive period.

2. The method of claim 1, wherein configuring the transceiver comprises:

configuring the transceiver for a first communication system during a first time period; and configuring the transceiver for a second communication system during a second time period occurring during an idle period of a communication with the first communication system.

3. The method of claim 2, wherein the second communication system is a synchronous with the first communication system.

4. The method of claim 1, further comprising:

configuring the wireless transceiver for the first packet data communication based in part on the priority.

5. The method of claim 1, wherein the TDMA communication system comprises a GSM wireless communication system.

6. The method of claim 1, wherein the first packet data communication system comprises a Personal Area Network (PAI).

7. The method of claim 1, wherein the first packet data communication system comprises a Bluetooth communication system.

8. The method of claim 1, wherein the first packet data communication system comprises a

9. The method of claim 1, wherein the first packet data communication system comprises an IEEE 802.11 communication system.

10. The method of claim 1, further comprising configuring the wireless transceiver for a second packet data communication system during at least one additional idle slot of the TDMA communication system distinct from the idle time slot in which the wireless transceiver is configured for the first packet data communication system.

11. The method of claim 10, wherein the first packet data communication system comprises a Personal Area Network (PAN) and the second packet data communication system comprises a Wireless Local Area Network (WLAN).

12. The method of claim 10, wherein the first packet data communication system comprises a Bluetooth communication system and the second packet data communication system comprises an IEEE 802.11 communication system.

13. A method of supporting communications with multiple communication systems in a wireless device, where at least two of the multiple communication systems operate with different communication standards, the method being **characterized by**:

determining a plurality of active communication links corresponding to the multiple communication systems; and configuring a wireless transceiver in the wireless device in a time multiplexed manner to support each of the plurality of active communication links, a timing of the time multiplexing determined in part based on a timing of a first active communication link in the plurality of active communication links;
wherein configuring the transceiver comprises:

configuring a wireless transceiver for a Time Domain Multiple Access (TDMA) communication system; and configuring the wireless transceiver for a first packet data communication system during at least one idle time slot of the TDMA communication system;
wherein a time reference for the TDMA communication system comprises a reference independent of a time reference for the packet data communication system;
configuring a second wireless transceiver to support a GSM communication link, wherein configuring a receiver portion of the second wireless transceiver for a GSM receive period occurring in an assigned GSM time slot; and
configuring the receiver portion for a monitor period occurring in a GSM time slot immediately following the GSM receive period.

14. The method of claim 13, wherein configuring the wireless transceiver in the wireless device in the time multiplexed manner comprises time multiplexing the wireless transceiver to support each of the active communication links using a round robin schedule.

15. The method of claim 13, wherein configuring the wireless transceiver in the wireless device in the time multiplexed mariner comprises time multiplexing the wireless transceiver to support each of the active communication links based on a predetermined hierarchy of communication systems.

16. The method of claim 15, wherein real time data communication systems are ranked higher in the hierarchy than non real time communication systems.

17. A method of supporting communications with multiple communication systems in a wireless device, where at least two of the multiple communication systems operate with different communication standards, the method being **characterized by**:

configuring a wireless transceiver to support a GSM communication link, wherein configuring the wireless transceiver to support the GSM communication link comprises:

configuring a receiver portion of the wireless transceiver for a GSM receive period occurring in an assigned GSM time slot; and
configuring the receiver portion for a monitor period occurring in a GSM time slot immediately following the GSM receive period; and
configuring the wireless transceiver in a time multiplexed manner to support a first packet data communication system during at least a portion of a GSM idle time.

18. The method of claim 17, wherein the GSM idle time comprises at least one GSM time slot following a GSM transmit period.

19. The method of claim 17, wherein the GSM idle time comprises at lest one GSM time slot following a GSM monitor period.

20. The method of claim 17, wherein the GSM idle time comprises at least one time slot following a GSM receive period.

21. The method of claim 17, further comprising configuring the wireless transceiver in the time multiplexed manner to support a second packet data communication system during a portion of the GSM idle time not allocated to the first packet data communication system.

22. A method of supporting communications with multiple communication systems in a wireless device, where at least two of the multiple communication systems operate with different communication standards, the method being **characterized by**:

configuring a wireless transceiver to support a GSM communication link; and
configuring a receiver portion of the wireless transceiver for a GSM receive period occurring in an assigned GSM time slot;
configuring the receiver portion for a monitor period occurring in a GSM time slot immediately following the GSM receive period;
configuring the wireless transceiver in a time multiplexed manner to support a first packet data communication system during at least a portion of a GSM idle time, wherein
configuring the wireless transceiver in the time multiplexed manner to support the first packet data communication system comprises:

determining a duration of the GSM idle time;
determining a packet length that can be transmitted during the GSM idle time;
configuring the wireless transceiver to support the first packet data communication system after a beginning of the GSM idle time; and
transmitting, with the wireless transceiver, a data frame having the packet length.

23. A method of supporting communications with multiple communication systems in a wireless device, where at least two of the multiple communication systems operate with different communication standards, the method being **characterized by**:

configuring a wireless transceiver to support a GSM communication link; and
configuring a receiver portion of the wireless transceiver for a GSM receive period occurring in an assigned GSM time slot;
configuring the receiver portion for a monitor period occurring in a GSM time slot immediately following the GSM receive period;
configuring the wireless transceiver in a time multiplexed manner to support a first packet data communication system during at least a portion of a GSM idle time, wherein
configuring the wireless transceiver in the time multiplexed manner to support the first packet data communication system comprises:

determining a duration of the GSM idle time;
configuring the wireless transceiver to support the first packet data communication system after a beginning of the GSM idle time;
transmitting a retrieval command; and
receiving a data frame in response to the retrieval command.

**Patentansprüche**

1. Ein Verfahren zur Unterstützung von Übertragungen mit multiplen Übertragungssystemen in einer drahtlosen Vorrichtung, wobei zumindest zwei der multiplen Übertragungssysteme mit verschiedenen Übertragungsstandards arbeiten, wobei das Verfahren **gekennzeichnet ist durch**:

Bestimmen einer Priorität einer jeden aktiven Übertragungsverbindung in den multiplen Übertragungssystemen, basierend zum Teil auf einer vorgegebenen Hierarchie;
Konfigurieren eines Sendeempfängers in der drahtlosen Vorrichtung, die Multiplex-Übertragungen mit jeder aktiven Übertragungsverbindung in den multiplen Übertragungssystemen festzulegen, wobei das Festlegen der Zeitmultiplex-Übertragung mit jeder der aktiven Übertragungsverbindung auf der Priorität jeder aktiven Übertragungsverbindung basiert;
wobei das Konfigurieren des Sendeempfängers umfasst:

Konfigurieren eines drahtlosen Sendeempfängers für ein Time Domain Multiple Access (TDMA)-Übertragungssystem; und
Konfigurieren des drahtlosen Sendeempfängers für ein erstes Paketdaten-Übertragungssystem während zumindest eines Leerlaufzeitkanals des TDMA-Übertragungssystems;
wobei ein Zeitbezug für das TDMA-Übertragungssystem einen Bezug umfasst, welcher von einem Zeitbezug für das Paketdatenübertragungssystem unabhängig ist;
Konfigurieren eines zweiten drahtlosen Sendeempfängers, um eine GSM-Übertragungsverbindung zu unterstützen, wobei ein Empfängeranteil des zweiten drahtlosen Sendeempfängers für eine GSM-Empfangsperiode, welche in einem zugeordneten Zeitkanal auftritt, konfiguriert wird; und
Konfigurieren des Empfängeranteils für eine Überwachungsperiode, welche in einem GSM-Zeitkanal umgehend auf die GSM-Empfangsperiode folgt.

2. Das Verfahren nach Anspruch 1, wobei das Konfigurieren des Sendeempfängers umfasst: Konfigurieren des Sendeempfängers für ein erstes Übertragungssystem während einer ersten Zeitperiode und Konfigurieren des Sendeempfängers für ein zweites Übertragungssystem während einer zweiten Zeitperiode, welche während eines Leerlaufzeitkanals der Übertragung mit dem ersten Übertragungssystem auftritt.

3. Das Verfahren nach Anspruch 2, wobei das zweite Übertragungssystem asynchron mit dem ersten Übertragungssystem ist.

4. Das Verfahren nach Anspruch 1, weiter umfassend: Konfigurieren des drahtlosen Sendeempfängers für die erste Paketdatenübertragung, welche zum Teil auf der Priorität basiert.

5. Das Verfahren nach Anspruch 1, wobei das TDMA-Übertragungssystem ein drahtloses GSM-Übertragungssystem umfasst.

6. Das Verfahren nach Anspruch 1, wobei das erste Paketdatenübertragungssystem ein Personal Area Network (PAN) umfasst.

7. Das Verfahren nach Anspruch 1, wobei das erste Paketdatenübertragungssystem ein Bluetooth-Übertragungssystem umfasst.

8. Das Verfahren nach Anspruch 1, wobei das erste Paketdatenübertragungssystem ein Wireless Local Area Network (WLAN)-Übertragungssystem umfasst.

9. Das Verfahren nach Anspruch 1, wobei das erste Paketdatenübertragungssystem ein IEEE802.11-Übertragungssystem umfasst.

10. Das Verfahren nach Anspruch 1, weiter umfassend das Konfigurieren des drahtlosen Sendeempfängers für ein zweites Paketdatenübertragungssystem während zumindest einem zusätzlichen freien Sendeplatz des TDMA-Übertragungssystems verschieden von dem Leerlaufzeitkanal, in welchem der drahtlose Sendeempfänger für das erste Paketdaten-Übertragungssystem konfiguriert ist.

11. Das Verfahren nach Anspruch 10, wobei das erste Paketdaten-Übertragungssystem ein Personal Area Network (PAN) umfasst und das zweite Paketdaten-Übertragungssystem ein Wireless Local Area Network (WLAN) umfasst.

12. Das Verfahren nach Anspruch 10, wobei das erste Paketdaten-Übertragungssystem ein Bluetooth-Übertragungssystem umfasst und das zweite Paketdaten-Übertragungssystem ein IEEE 802.11-Übertragungssystem umfasst.

13. Ein Verfahren zur Unterstützung von Übertragungen mit multiplen Übertragungssystemen in einer drahtlosen Vorrichtung, wo zumindest zwei der multiplen Übertragungssysteme mit verschiedenen Übertragungsstandards arbeiten, wobei das Verfahren **gekennzeichnet ist durch**:

Festlegen einer Vielzahl von aktiven Übertragungsverbindungen entsprechend der multiplen Übertragungssysteme; und
Konfigurieren eines drahtlosen Sendeempfängers in der drahtlosen Vorrichtung in einer zeitüberlagerten Art, um jede der Vielzahl von aktiven Übertragungsverbindungen zu unterstützen; ein Timing des Zeitmultiplexbetriebs wird festgelegt basierend zum Teil auf einem Timing einer ersten aktiven Übertragungsverbindung in der Vielzahl von Übertragungsverbindungen;
wobei das Konfigurieren des Sendeempfängers umfasst:

Konfigurieren eines drahtlosen Sendeempfängers für ein Time Domain Multiple Access (TDMA)-Übertragungssystem; und
Konfigurieren des drahtlosen Sendeempfängers für ein erstes Paketdaten-Übertragungssystem während zumindest einem Leerlaufzeitkanal des TDMA-Übertragungssystems;
wobei ein Zeitbezug für das TDMA-Übertragungssystem einen Bezug umfasst, welcher von einem Zeitbezug für das Paketdaten-Übertragungssystem unabhängig ist;
Konfigurieren eines zweiten drahtlosen Sendeempfängers, um eine GSM-Übertragungsverbindung zu unterstützen, wobei ein Empfängeranteil des zweiten drahtlosen Sendeempfängers für eine GSM-Empfangsperiode, welche in einem zugeordneten Zeitkanal auftritt, konfiguriert wird; und
Konfigurieren des Empfängeranteils für eine Überwachungsperiode, welche in einem GSM-Zeitkanal umgehend auf die GSM-Empfangsperiode folgt.

**14.** Das Verfahren nach Anspruch 13, wobei das Konfigurieren des drahtlosen Sendeempfängers in der drahtlosen Vorrichtung in der zeitüberlagerten Art einen Zeitmultiplexbetrieb des drahtlosen Sendeempfängers umfasst, um jede der aktiven Übertragungsverbindungen, welche ein Ringverteilungsprogramm verwenden, zu unterstützen.

**15.** Das Verfahren nach Anspruch 13, wobei das Konfigurieren des drahtlosen Sendeempfängers in der drahtlosen Vorrichtung in der zeitüberlagerten Art einen Zeitmultiplexbetrieb des drahtlosen Sendeempfängers umfasst, um jede der aktiven Übertragungsverbindungen, welche auf einer vorgegebenen Hierarchie der Übertragungssysteme basieren, zu unterstützen.

**16.** Das Verfahren nach Anspruch 15, wobei die Echtzeitdaten-Übertragungssysteme höher in der Hierarchie eingestuft sind als nicht Echtzeit-Übertragungssysteme.

**17.** Ein Verfahren zur Unterstützung von Übertragungen mit multiplen Übertragungssystemen in einer drahtlosen Vorrichtung, wo zumindest zwei der multiplen Übertragungssysteme mit verschiedenen Übertragungsstandards arbeiten, wobei das Verfahren **gekennzeichnet ist durch**:

Konfigurieren eines drahtlosen Sendeempfängers, um eine GSM Übertragungsverbindung zu unterstützen, wobei das Konfigurieren des drahtlosen Sendeempfängers, um die GSM-Übertragungsverbindung zu unterstützen, umfasst:

Konfigurieren eines Empfängeranteils des drahtlosen Sendeempfängers für eine GSM Empfangsperiode, welche in einem zugeordneten Zeitkanal auftritt; und
Konfigurieren des Empfängeranteils für eine Überwachungsperiode, welche in einem GSM-Zeitkanal auftritt, welcher umgehend auf die GSM Empfangsperiode folgt; und
Konfigurieren des drahtlosen Sendeempfängers in einer zeitüberlagerten Art, um ein erstes Paketdaten-Übertragungssystem während zumindest einem Anteil einer GSM-Leerlaufzeit zu unterstützen.

**18.** Das Verfahren nach Anspruch 17, wobei die GSM-Leerlaufzeit zumindest einen GSM Zeitkanal umfasst, welcher auf eine GSM-Übertragungsperiode folgt.

**19.** Das Verfahren nach Anspruch 17, wobei die GSM-Leerlaufzeit zumindest einen GSM Zeitkanal umfasst, welcher auf eine GSM-Überwachungsperiode folgt.

**20.** Das Verfahren nach Anspruch 17, wobei die GSM-Leerlaufzeit zumindest einen GSM Zeitkanal umfasst, welcher auf eine GSM-Empfangsperiode folgt.

**21.** Das Verfahren nach Anspruch 17, weiter umfassend das Konfigurieren des drahtlosen Sendeempfängers in der zeitüberlagerten Art, um ein zweites Paketdaten-Übertragungssystem während eines Anteils der GSM-Leerlaufzeit, welche nicht dem ersten Paketdaten-Übertragungssystem zugeordnet ist, zu unterstützen.

**22.** Ein Verfahren zur Unterstützung von Übertragungen mit multiplen Übertragungssystemen in einer drahtlosen Vorrichtung, wo zumindest zwei der multiplen Übertragungssysteme mit verschiedenen Übertragungsstandards arbeiten, wobei das Verfahren **gekennzeichnet ist durch**:

Konfigurieren eines drahtlosen Sendeempfängers, um eine GSM-Übertragungsverbindung zu unterstützen; und
Konfigurieren eines Empfängeranteils des drahtlosen Sendeempfängers für eine GSM-Empfangsperiode, welche in einem zugeordneten GSM-Zeitkanal auftritt;
Konfigurieren des Empfängeranteils für eine Überwachungsperiode, welche in einem GSM-Zeitkanal auftritt, welcher umgehend auf die GSM-Empfangsperiode folgt;
Konfigurieren des drahtlosen Sendeempfängers in einer zeitüberlagerten Art, um ein erstes Paketdaten-Übertragungssystem währen zumindest einem Anteil einer GSM-Leerlaufzeit zu unterstützen, wobei das Konfigurieren des drahtlosen Sendeempfängers in einer zeitüberlagerten Art, um das erste Paketdaten-Übertragungssystem zu unterstützen, umfasst:

Bestimmen einer Dauer der GSM-Leerlaufzeit;
Bestimmen einer Paketlänge, welche während der GSM-Leerlaufzeit übertragen werden kann;
Konfigurieren des drahtlosen Sendeempfängers, um das erste Paketdaten-Übertragungssystem nach einem Beginn der GSM-Leerlaufzeit zu unterstützen; und

Übertragen eines Daten-Frames, welcher die Paketlänge aufweist, mit dem drahtlosen Sendeempfänger.

23. Ein Verfahren zur Unterstützung von Übertragungen mit multiplen Übertragungssystemen in einer drahtlosen Vorrichtung, wo zumindest zwei der multiplen Übertragungssysteme mit verschiedenen Übertragungsstandards arbeiten, wobei das Verfahren **gekennzeichnet ist durch**:

Konfigurieren eines drahtlosen Sendeempfängers, um eine GSM-Übertragungsverbindung zu unterstützen; und
Konfigurieren eines Empfängeranteils des drahtlosen Sendeempfängers für eine GSM Empfangsperiode, welche in einem zugeordneten GSM-Zeitkanal auftritt;
Konfigurieren des Empfängeranteils für eine Überwachungsperiode, welche in einem GSM-Zeitkanal auftritt, welcher direkt auf die GSM-Empfangsperiode folgt;
Konfigurieren des drahtlosen Sendeempfängers in einer zeitüberlagerten Art, um ein erstes Paketdaten-Übertragungssystem während zumindest eines Anteils einer GSM-Leerlaufzeit zu unterstützen, wobei
das Konfigurieren des drahtlosen Sendeempfängers in der zeitüberlagerten Art, um ein erstes Paketdaten-Übertragungssystem zu unterstützen, umfasst:

Bestimmen der Dauer der GSM-Leerlaufzeit;
Konfigurieren des drahtlosen Sendeempfängers, um das erste Paketdaten-Übertragungssystem nach einem Beginn der GSM-Leerlaufzeit zu unterstützen;
Übertragen eines Abfragebefehls; und
Empfangen eines Datenframes in Antwort auf den Abfragebefehl.

## Revendications

1. Procédé permettant de supporter des communications avec de multiples systèmes de communication dans un dispositif sans fil, où au moins deux des multiples systèmes de communication fonctionnent avec des normes de communication différentes, le procédé étant **caractérisé par** :

la détermination d'une priorité de chaque liaison de communication active dans les multiples systèmes de communication sur la base en partie d'une hiérarchie prédéterminée ;
la configuration d'un émetteur-récepteur dans le dispositif sans fil pour multiplexer dans le temps des communications avec chaque liaison de communication active dans les multiples systèmes de communication, où le positionnement temporel des communications multiplex dans le temps avec chaque liaison de communication active est basé sur la priorité de chaque liaison de communication active ;
dans lequel l'émetteur-récepteur comprend :

la configuration d'un émetteur-récepteur sans fil pour un système de communication à accès multiple dans le domaine temporel (TDMA) ; et
la configuration de l'émetteur-récepteur sans fil pour un premier système de communication de données par paquets pendant au moins un créneau temporel inactif du système de communication TDMA ;
dans lequel une référence temporelle pour le système de communication TDMA comprend une référence indépendante d'une référence temporelle pour le système de communication de données par paquets ;
la configuration d'un second émetteur-récepteur sans fil pour supporter une liaison de communication GSM, dans lequel
la configuration d'une partie de récepteur du second émetteur-récepteur sans fil pour une période de réception GSM se produisant dans un créneau temporel GSM assigné ; et
la configuration de la partie de récepteur pour une période de surveillance se produisant dans un créneau temporel GSM suivant immédiatement la période de réception GSM.

2. Procédé selon la revendication 1, dans lequel la configuration de l'émetteur-récepteur comprend :

la configuration de l'émetteur-récepteur pour un premier système de communication pendant une première période de temps ; et
la configuration de l'émetteur-récepteur pour un second système de communication pendant une seconde période de temps se produisant pendant une période d'inactivité d'une communication avec le premier système de communication.

3. Procédé selon la revendication 2, dans lequel le second système de communication est asynchrone avec le premier système de communication.

4. Procédé selon la revendication 1, comprenant en outre :

   la configuration de l'émetteur-récepteur sans fil pour la première communication de données par paquets sur la base au moins en partie de la priorité.

5. Procédé selon la revendication 1, dans lequel le système de communication TDMA comprend un système de communication sans fil GSM.

6. Procédé selon la revendication 1, dans lequel le premier système de communication de données par paquets comprend un réseau personnel (PAN).

7. Procédé selon la revendication 1, dans lequel le premier système de communication de données par paquets comprend un système de communication Bluetooth.

8. Procédé selon la revendication 1, dans lequel le premier système de communication de données par paquets comprend un système de communication de réseau local sans fil (WLAN).

9. Procédé selon la revendication 1, dans lequel le premier système de communication de données par paquets comprend un système de communication IEEE 802.11.

10. Procédé selon la revendication 1, comprenant en outre la configuration de l'émetteur-récepteur sans fil pour un second système de communication de données par paquets pendant au moins un créneau inactif additionnel du système de communication TDMA distinct du créneau temporel inactif dans lequel l'émetteur-récepteur sans fil est configuré pour le premier système de communication de données par paquets.

11. Procédé selon la revendication 10, dans lequel le premier système de communication de données par paquets comprend un réseau personnel (PAN) et le second système de communication de données par paquets comprend un réseau local sans fil (WLAN).

12. Procédé selon la revendication 10, dans lequel le premier système de communication de données par paquets comprend un système de communication Bluetooth et le second système de communication de données par paquets comprend un système de communication IEEE 802.11.

13. Procédé permettant de supporter des communications avec de multiples systèmes de communication dans un dispositif sans fil, où au moins deux des multiples systèmes de communication fonctionnent avec des normes de communication différentes, le procédé étant **caractérisé par** :

   la détermination d'une pluralité de liaisons de communication actives correspondant aux multiples systèmes de communication ; et
   la configuration d'un émetteur-récepteur sans fil dans le dispositif sans fil d'une manière multiplexée dans le temps pour supporter chacune de la pluralité de liaisons de communication actives, un positionnement temporel du multiplexage dans le temps déterminé en partie sur la base d'un positionnement temporel d'une première liaison de communication active dans la pluralité de liaisons de communication actives ;
   dans lequel la configuration de l'émetteur-récepteur comprend :

      la configuration d'un émetteur-récepteur sans fil pour un système de communication à accès multiple dans le domaine temporel (TDMA) ; et
      la configuration de l'émetteur-récepteur sans fil pour un premier système de communication de données par paquets pendant au moins un créneau temporel inactif du système de communication TDMA ;
      dans lequel une référence temporelle pour le système de communication TDMA comprend une référence indépendante d'une référence temporelle pour le système de communication de données par paquets ;
      la configuration d'un second émetteur-récepteur sans fil pour supporter une liaison de communication GSM, dans lequel
      la configuration d'une partie de récepteur du second émetteur-récepteur sans fil pour une période de réception GSM se produisant dans un créneau temporel GSM assigné ; et

la configuration de la partie de récepteur pour une période de surveillance se produisant dans un créneau temporel GSM suivant immédiatement la période de réception GSM.

14. Procédé selon la revendication 13, dans lequel la configuration de l'émetteur-récepteur sans fil dans le dispositif sans fil de la manière multiplexée dans le temps comprend le multiplexage dans le temps de l'émetteur-récepteur sans fil pour supporter chacune des liaisons de communication actives en utilisant un programme à tour de rôle.

15. Procédé selon la revendication 13, dans lequel la configuration de l'émetteur-récepteur sans fil dans le dispositif sans fil de la manière multiplexée dans le temps comprend le multiplexage dans le temps de l'émetteur-récepteur sans fil pour supporter chacune des liaisons de communication actives sur la base d'une hiérarchie prédéterminée de systèmes de communication.

16. Procédé selon la revendication 15, dans lequel des systèmes de communication de données en temps réel sont classés plus haut dans la hiérarchie que des systèmes de communication en temps non réel.

17. Procédé permettant de supporter des communications avec de multiples systèmes de communication dans un dispositif sans fil, où au moins deux des multiples systèmes de communication fonctionnent avec des normes de communication différentes, le procédé étant **caractérisé par** :

la configuration d'un émetteur-récepteur sans fil pour supporter une liaison de communication GSM, dans lequel la configuration de l'émetteur-récepteur sans fil pour supporter la liaison de communication GSM comprend :

la configuration d'une partie de récepteur de l'émetteur-récepteur sans fil pour une période de réception GSM se produisant dans un créneau temporel GSM assigné ; et
la configuration de la partie de récepteur pour une période de surveillance se produisant dans un créneau temporel GSM suivant immédiatement la période de réception GSM ; et
la configuration de l'émetteur-récepteur sans fil d'une manière multiplexée dans le temps pour supporter un premier système de communication de données par paquets pendant au moins une partie d'un temps d'inactivité GSM.

18. Procédé selon la revendication 17, dans lequel le temps d'inactivité GSM comprend au moins un créneau temporel GSM suivant une période de transmission GSM.

19. Procédé selon la revendication 17, dans lequel le temps d'inactivité GSM comprend au moins un créneau temporel GSM suivant une période de surveillance GSM.

20. Procédé selon la revendication 17, dans lequel le temps d'inactivité GSM comprend au moins un créneau temporel suivant une période de réception GSM.

21. Procédé selon la revendication 17, comprenant en outre la configuration de l'émetteur-récepteur sans fil de la manière multiplexée dans le temps pour supporter un second système de communication de données par paquets pendant une partie du temps d'inactivité GSM non alloué au premier système de communication de données par paquets.

22. Procédé permettant de supporter des communications avec de multiples systèmes de communication dans un dispositif sans fil, où au moins deux des multiples systèmes de communication fonctionnent avec des normes de communication différentes, le procédé étant **caractérisé par** :

la configuration d'un émetteur-récepteur sans fil pour supporter une liaison de communication GSM ; et
la configuration d'une partie de récepteur de l'émetteur-récepteur sans fil pour une période de réception GSM se produisant dans un créneau temporel GSM assigné ;
la configuration de la partie de récepteur pour une période de surveillance se produisant dans un créneau temporel GSM suivant immédiatement la période de réception GSM ;
la configuration de l'émetteur-récepteur sans fil d'une manière multiplexée dans le temps pour supporter un premier système de communication de données par paquets pendant au moins une partie d'un temps d'inactivité GSM, dans lequel
la configuration de l'émetteur-récepteur sans fil de la manière multiplexée dans le temps pour supporter le premier système de communication de données par paquets comprend :

la détermination d'une durée du temps d'inactivité GSM ;

la détermination d'une longueur de paquet qui peut être transmise pendant le temps d'inactivité GSM ;

la configuration de l'émetteur-récepteur sans fil pour supporter le premier système de communication de données par paquets après un début du temps d'inactivité GSM ; et

la transmission, avec l'émetteur-récepteur sans fil, d'une trame de données ayant la longueur de paquet.

23. Procédé permettant de supporter des communications avec de multiples systèmes de communication dans un dispositif sans fil, où au moins deux des multiples systèmes de communication fonctionnent avec des normes de communication différentes, le procédé étant **caractérisé par** :

la configuration d'un émetteur-récepteur sans fil pour supporter une liaison de communication GSM ; et

la configuration d'une partie de récepteur de l'émetteur-récepteur sans fil pour une période de réception GSM se produisant dans un créneau temporel GSM assigné ;

la configuration de la partie de récepteur pour une période de surveillance se produisant dans un créneau temporel GSM suivant immédiatement la période de réception GSM ;

la configuration de l'émetteur-récepteur sans fil d'une manière multiplexée dans le temps pour supporter un premier système de communication de données par paquets pendant au moins une partie d'un temps d'inactivité GSM, dans lequel

la configuration de l'émetteur-récepteur sans fil de la manière multiplexée dans le temps pour supporter le premier système de communication de données par paquets comprend :

la détermination d'une durée du temps d'inactivité GSM ;

la configuration de l'émetteur-récepteur sans fil pour supporter le premier système de communication de données par paquets après un début du temps d'inactivité GSM ;

la transmission d'une commande de récupération ; et

la réception d'une trame de données en réponse à la commande de récupération.

FIG. 1

230

Reconfigurable Radio

240

Standard 1 & Standard 2 & Standard 3 Baseband & Software

250

100

**FIG. 2B**

202c

210c

Standard 3 Radio

220c

Standard 3 Baseband & Software

202b

210b

Standard 2 Radio

220b

Standard 2 Baseband & Software

202a

210a

Standard 1 Radio

220a

Standard 1 Baseband & Software

200

**FIG. 2A**
Prior Art

FIG. 2c

FIG. 2D

EP 1 639 844 B1

EP 1 639 844 B1

| 410 | 420 | 430 | 440 | | 450 | 460 |
|-----|-----|-----|-----|---|-----|-----|
| Configure Radio | Standard A Receive or Transmit | Configure Radio | Standard B Receive or Transmit | • • • | Configure Radio | Standard N Receive or Transmit |

time →

## FIG. 3A

**Standard 1** — 410 420 — | C | TX/RX |   470 480 — | C | TX/RX |

**Standard 2** — 430 440 — | C | TX/RX |

**Standard 3** — 450 460 — | C | TX/RX |

time →

## FIG. 3B

Standard 1   410  420                    442    470   480
           ┌─┬────┐   430  440   ◄─────►┌─┬────┐
           │C│ TX │                     │C│ TX │
           └─┴────┘
Standard 2         ┌─┬────┐
                   │C│ TX │
                   └─┴────┘
                                                    time →

## FIG. 3C

Standard 1   410  420                         470   480
           ┌─┬────┐   430    440          ┌─┬────┐
           │C│ TX │                       │C│ TX │
           └─┴────┘
Standard 2         ┌─┬───────────┐
                   │C│    TX     │
                   └─┴───────────┘
                                                    time →

## FIG. 3D

Standard 1   410  420      432        470  480
           ┌─┬────┐  430 ┌──┐  440  ┌─┬────┐
           │C│ TX │      │  │       │C│ TX │
           └─┴────┘      └──┘       └─┴────┘
Standard 2         ┌─┬─┬──────┐
                   │C│S│  RX  │
                   └─┴─┴──────┘
                                                    time →

## FIG. 3E

EP 1 639 844 B1

EP 1 639 844 B1

500

502

1  2  3  4  5  6  7  8

| RX | | | TX | | | MON | |

577  400 577  400 300  400

512  520  522  530 532  510

11  12  13  14  15  16  17  18

M  S  M  S  M  S  M  S  M  S  M  S  M  S  M  S  M

312 160 312 160 312 160 312 160 312 160 312 160 312 160 312 160 312 160 312 160 312 160 312 160 312 160 312 160

542  550  540

552  542

**FIG. 4A**

EP 1 639 844 B1

500    502

1  2  3  4  5  6  7  8

| RX | MON | TX | | | | | | RX | MON | TX | | | | |

577  160 300 160 577    160  577  160 300 160 577

512

530  532 520  522

510

11  12  13  14  15  16  17  18

| M | S | M | S | M | S | M | S | M | S | M | S | M | S | M | S | M |

312 160 312 160 312 160 312 160 312 160 312 160 312 160 312  160 312 160 312 160 312 160 312 160 312 160 312 160 312 160 312 160

542  550  540

552  542

**FIG. 4B**

FIG. 4C

EP 1 639 844 B1

500    502

| RX | MON | TX | MON | | | RX | TX | | | | |

577  160 300 160  577   160 300    160  577   160  577

512

530a  532a 520  522   530b  532b    510

| RX | MON | | MON | | | RX | | | | | |

577  160 300    160 300    160  577

512

530a  532a   530b 532b    510

EP 1 639 844 B1

FIG. 4D

FIG. 5A

EP 1 639 844 B1

570  572  574  576

| Station A | GSM | WLAN | GSM | WLAN |
| Access Point | DATA | | DATA | | DATA | ACK |

580  580  580  670  time

## FIG. 5B

500  502

560  562  563  564  670

| Configure | CSMA | PS-Poll | Data | ACK |

1  2  3  4  5  6  7  8

| RX | MON | TX | | | | | RX | MON | TX | | | | |

512  577  160  300  160  577  160  577  160  300  160  577

530  532  520  522  510

## FIG. 5C

500

502

TDMA Frame
N

TDMA Frame
N + 1

1  2  3  4  5  6  7  8

| RX | MON | TX | | | | | | RX | MON | TX | | | |

577  160 300 160 577  160  577 160 300 160 577

512

530  532 520  522

Beacon

610

TDMA Frame
10*120ms/26 + N

TDMA Frame
10*120ms/26 + N + 1

10  11  12  13  14  15  16  17

| RX | MON | TX | | | | | | RX | MON | TX | | | |

577  160 300 160 577  160  577 160 300 160 577

512

530  532 520  522

Beacon

610

FIG. 6

EP 1 639 844 B1

500 502

1 2 3 4 5 6 7 8 41 42 43 44 45 46 47 48

RX | MON | TX | | | | | RX | MON | TX | | | | |

577 | 160 300 | 160 577 | 160 | 577 | 160 300 | 160 | 577

512

530 532 520 522

31 32 33 34 35 36 37 38 51 52 53 54 55 56 57 58

RX | MON | | | | | | RX | MON | | | | | |

577 | 160 300 | 160 | 577 | 160 | 300

512

530 532

11 12 13 14 15 16 17 18 19 20 21 22 23 24 25 26

M | S | M | S | M | S | M | S | M | S | M | S | M | S | M

312 | 160 312 | 160 312 | 160 312 | 160 312 | 160 312 | 160 312 | 160 312 | 160 312 | 160 312 | 160 312 | 160 312 | 160 312 | 160 312 | 160

542 550 540

552 542

160 | CSMA | DATA | ACK

560 562 564 670

FIG. 7

FIG. 8

EP 1 639 844 B1

FIG. 9